(19) Europäisches Patentamt
European Patent Office
Office européen des brevets

(11) **EP 3 434 017 B1**

(12) **EUROPEAN PATENT SPECIFICATION**

(45) Date of publication and mention
of the grant of the patent:
**28.02.2024 Bulletin 2024/09**

(21) Application number: **17719370.3**

(22) Date of filing: **22.03.2017**

(51) International Patent Classification (IPC):
**H04N 19/176** (2014.01)   **H04N 19/126** (2014.01)
**H04N 19/152** (2014.01)

(52) Cooperative Patent Classification (CPC):
**H04N 19/126; H04N 19/152; H04N 19/176;**
H04N 19/15; H04N 19/197

(86) International application number:
**PCT/US2017/023604**

(87) International publication number:
**WO 2017/165529 (28.09.2017 Gazette 2017/39)**

(54) **APPARATUS AND METHOD FOR ENCODING VIDEO INFORMATION WITH ADAPTIVE CALCULATION OF QUANTIZATION PARAMETERS IN DISPLAY STREAM COMPRESSION**

VORRICHTUNG UND VERFAHREN ZUR KODIERUNG VON VIDEOINFORMATIONEN MIT ADAPTIVER BERECHNUNG VON QUANTISIERUNGSPARAMETERN BEI DER ANZEIGESTROMKOMPRESSION

APPAREIL ET PROCÉDÉ D'ENCODAGE D'INFORMATION VIDEO AVEC CALCUL ADAPTATIF DE PARAMÈTRES DE QUANTIFICATION DANS UNE COMPRESSION DE FLUX D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2016   US 201662311586 P
28.04.2016   US 201662329160 P
21.03.2017   US 201715465328**

(43) Date of publication of application:
**30.01.2019   Bulletin 2019/05**

(73) Proprietor: **QUALCOMM Incorporated**
San Diego, California 92121-1714 (US)

(72) Inventors:
 • **THIRUMALAI, Vijayaraghavan**
San Diego, California 92121-1714 (US)
 • **JACOBSON, Natan Haim**
San Diego, California 92121-1714 (US)
 • **JOSHI, Rajan Laxman**
San Diego, California 92121-1714 (US)

(74) Representative: **Loveless, Ian Mark**
**Reddie & Grose LLP**
**The White Chapel Building**
**10 Whitechapel High Street**
**London E1 8QS (GB)**

(56) References cited:
**EP-A2- 1 096 803          EP-A2- 2 725 809
WO-A1-2016/022938     US-A1- 2003 043 904
US-A1- 2009 310 672     US-A1- 2015 010 068**

• **MUHAMMAD SHAFIQUE ET AL: "Non-linear rate control for H.264/AVC video encoder with multiple picture types using image-statistics and motion-based Macroblock Prioritization", IMAGE PROCESSING (ICIP), 2009 16TH IEEE INTERNATIONAL CONFERENCE ON, IEEE, PISCATAWAY, NJ, USA, 7 November 2009 (2009-11-07), pages 3429-3432, XP031628517, ISBN: 978-1-4244-5653-6**

- **WALLS FREDERICK G ET AL: "VESA Display Stream Compression for Television and Cinema Applications", IEEE JOURNAL ON EMERGING AND SELECTED TOPICS IN CIRCUITS AND SYSTEMS, IEEE, PISCATAWAY, NJ, USA, vol. 6, no. 4, 1 December 2016 (2016-12-01), pages 460-470, XP011636928, ISSN: 2156-3357, DOI: 10.1109/JETCAS.2016.2602009 [retrieved on 2016-12-12]**
- **"Display Stream Compression (DSC) Standard v1.1", VESA STAN, VESA, US , vol. V1.1 1 August 2014 (2014-08-01), pages 1-125, XP008177954, Retrieved from the Internet: URL:http://www.vesa.org/vesa-standards/standards-summaries/**
- **JUNJUN SI ET AL: "Adaptive rate control for High Efficiency Video Coding", 2012 VISUAL COMMUNICATIONS AND IMAGE PROCESSING, 1 November 2012 (2012-11-01), pages 1-6, XP055127645, DOI: 10.1109/VCIP.2012.6410769 ISBN: 978-1-46-734406-7**

**Description**

TECHNICAL FIELD

This disclosure relates to the field of video coding and compression, and particularly, to compression of video for transmission over display links.

BACKGROUND

Digital video capabilities can be incorporated into a wide range of displays, including digital televisions, personal digital assistants (PDAs), laptop computers, desktop monitors, digital cameras, digital recording devices, digital media players, video gaming devices, video game consoles, cellular or satellite radio telephones, video teleconferencing devices, and the like. Display links are used to connect displays to appropriate source devices. The bandwidth requirements of display links are proportional to the resolution of the displays, and thus, high-resolution displays require large bandwidth display links. Some display links do not have the bandwidth to support high resolution displays. Video compression can be used to reduce the bandwidth requirements such that lower bandwidth display links can be used to provide digital video to high resolution displays. A paper entitled "non-linear rate control for H264/AVC video encoder with multiple picture types using image statistics and motion-based macro block prioritization" describes buffer management including defining a maximum quantisation parameter.

SUMMARY

The systems, methods and devices of this disclosure each have several innovative aspects, no single one of which is solely responsible for the desirable attributes disclosed herein.

The invention is defined in the independent claims to which reference is directed with preferred features set out in the dependent claims..

.

.

.

BRIEF DESCRIPTION OF THE DRAWINGS

**FIG. 1A** is a block diagram illustrating an exemplary video encoding and decoding system that may utilize techniques in accordance with aspects described in this disclosure.

**FIG. 1B** is a block diagram illustrating another exemplary video encoding and decoding system that may perform techniques in accordance with aspects described in this disclosure.

**FIG. 2A** is a block diagram illustrating an exemplary video encoder that may implement techniques in accordance with aspects described in this disclosure.

**FIG. 2B** is a block diagram illustrating an exemplary video decoder that may implement techniques in accordance with aspects described in this disclosure.

**FIG. 3** shows a functional block diagram of an exemplary coding of video data using Delta size unit-variable length coding (DSU-VLC).

**FIG. 4** illustrates an example of partitioning the samples of a given P x Q block of video data into a plurality of sample vectors (groups), in accordance with some embodiments.

**FIG. 5** shows a graph illustrating an exemplary method of determining *QpAdj* by segmenting *diffBits* into *K+1* ranges using *K* threshold values.

**FIG. 6** shows a graph illustrating the relationship of delta Qp as a function of *diffBits* for the default method and method-P$_1$.

**FIG. 7** shows a graph illustrating the relationship of delta Qp as a function of diffBits for the default method, method-Q1 and method-Q2, in accordance with some embodiments.

**FIG. 8A** illustrates an exemplary image having a mixture of low complexity and high complexity image data.

**FIGs. 8B** and **8C** illustrate exemplary QP maps mapping QP values that may be used by the encoder in coding different spatial areas of the image of FIG. 8A, where the maximum QP value is fixed or dynamically adjusted, respectively.

**FIG. 9** shows a graph of an exemplary scheme for choosing an offset delta value for different ranges of buffer fullness (BF).

**FIG. 10** illustrates a graph of an exemplary scheme for choosing an offset delta value for different ranges of buffer fullness (BF).

**FIG. 11** shows a flowchart of an exemplary process for adjusting a maximum QP value for coding blocks of video data.

## DETAILED DESCRIPTION

In general, this disclosure relates to methods of improving video compression techniques such as those techniques used to compress display streams. More specifically, the present disclosure relates to an apparatus and a method for encoding video information which improve the updating of a quantization parameter (QP) via the selection of an appropriate technique for calculating a QP adjustment value.

While certain embodiments are described herein in the context of the Display Stream Compression (DSC) standard, systems and methods disclosed herein may be applicable to any suitable video coding standard. For example, embodiments disclosed herein may be applicable to one or more of the following standards: International Telecommunication Union (ITU) Telecommunication Standardization Sector (ITU-T) H.261, International Organization for Standardization/International Electrotechnical Commission (ISO/IEC) Moving Picture Experts Group-1 (MPEG-1) Visual, ITU-T H.262 or ISO/IEC MPEG-2 Visual, ITU-T H.263, ISO/IEC MPEG-4 Visual, ITU-T H.264 (also known as ISO/IEC MPEG-4 AVC), High Efficiency Video Coding (HEVC), and any extensions to such standards. The techniques described herein may be particularly applicable to standards or coding techniques which incorporate a buffer model. In various embodiments, constant bit rate (CBR) or a variable bit rate (VBR) buffer model may be utilized. Also, the techniques described in this disclosure may become part of standards developed in the future. In other words, the techniques described in this disclosure may be applicable to previously developed video coding standards, video coding standards currently under development, and forthcoming video coding standards.

A generation of 3:1 display stream compression (DSC) v1.0 solution recently finalized by the Video Electronics Standards Association (VESA) is insufficient to drive future mobile market requirements, especially for high resolution displays such as 4K. Therefore, to cope with future demands, VESA released CfT (call for technology) in order to develop a next generation DSC solution that targets compression ratios of 4:1 and higher.

Generally, a DSC coder provides low cost, fixed rate visually lossless compression. The coder is designed based on a block-based approach (with block size P x Q) and is comprised of a multitude of coding modes. For example, available coding options for each block are a transform (e.g., DCT, Hadamard), block prediction, DPCM, pattern, mid-point prediction (MPP) and mid-point predication fall back (MPPF) mode. Several coding modes are used in the coder in order to effectively compress different types of contents or images. For example, the text images can be effectively compressed by the pattern mode, while the natural image can be effectively captured by the transform mode.

Each block can choose one coding mode from the plurality of coding modes based on rate-control mechanism which aims to select the best mode for each block by considering both the rate and the distortion of the mode. The rate-control mechanism is supported by a buffer model, and it is the design requirement of the codec that the buffer (e.g., a buffer unit) is never in a state of underflow (fewer than zero bits in the buffer) or overflow (buffer size has increased past a set maximum size).

Video coding methods may calculate a QP value by updating a previously calculated QP value with a QP adjustment value. The QP adjustment value may be calculated based on a difference between a previous block and a current block, e.g., a difference between the bits required to code the previous block and the target number of bits in which to code the current block.

However, the QP adjustment value which is determined by conventional techniques may result in coding inefficiencies or may cause noticeable artifacts under certain circumstances. For example, conventional techniques for determining the QP adjustment value may not be aggressive enough for transitions from flat to complex regions of an image (e.g., the QP adjustment value may be smaller than a more desirable QP adjustment value which would result in better coding efficiency without noticeable artifacts). The concepts of flat and complex regions will be described in greater detail below.

Additionally, when the fullness of the buffer is within a threshold value of being empty or full, the conventional techniques for calculating the QP adjustment value may be too aggressive, resulting in artifacts in an image reconstructed by a decoder. For example, a QP adjustment value calculated by the conventional techniques may be larger than a more desirable QP adjustment value which would mask artifacts from being noticeable in the reconstructed image.

Accordingly, aspects of this disclosure are directed to solving at least the above-indicated problems. In certain aspects, this may be accomplished via the detection or determination of conditions which may be associated with the above-indicated problems, and applying one or more alternative techniques for calculating a QP adjustment value under the detected conditions.

**Video Coding Standards**

A digital image, such as a video image, a TV image, a still image or an image generated by a video recorder or a computer, may include pixels or samples arranged in horizontal and vertical lines. The number of pixels in a single image is typically in the tens of thousands. Each pixel typically contains luminance and chrominance information. Without compression, the sheer quantity of information to be conveyed from an image encoder to an image decoder would render real-time image transmission impractical. To reduce the amount of information to be transmitted, a number of different compression methods, such as JPEG, MPEG and H.263 standards, have been developed.

Video coding standards include ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 (also known as ISO/IEC MPEG-4 AVC), and HEVC including extensions of such standards.

In addition, a video coding standard, namely DSC, has been developed by VESA. The DSC standard is a video compression standard which can compress video for transmission over display links. As the resolution of displays increases, the bandwidth of the video data required to drive the displays increases correspondingly. Some display links may not have the bandwidth to transmit all of the video data to the display for such resolutions. Accordingly, the DSC standard specifies a compression standard for interoperable, visually lossless compression over display links.

The DSC standard is different from other video coding standards, such as H.264 and HEVC. DSC includes intra-frame compression, but does not include inter-frame compression, meaning that temporal information may not be used by the DSC standard in coding the video data. In contrast, other video coding standards may employ inter-frame compression in their video coding techniques.

**Video Coding System**

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the present disclosure. For example, an apparatus may be implemented or a method may be practiced using any number of the aspects set forth herein. In addition, the scope of the present disclosure is intended to cover such an apparatus or method which is practiced using other structure, functionality, or structure and functionality in addition to or other than the various aspects of the present disclosure set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

The attached drawings illustrate examples. Elements indicated by reference numbers in the attached drawings correspond to elements indicated by like reference numbers in the following description. In this disclosure, elements having names that start with ordinal words (e.g., "first," "second," "third," and so on) do not necessarily imply that the elements have a particular order. Rather, such ordinal words are merely used to refer to different elements of a same or similar type.

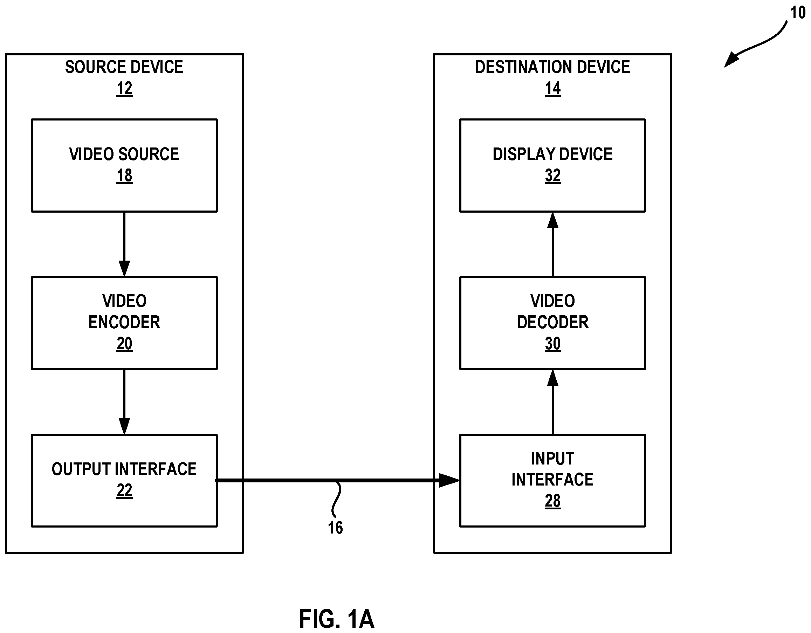

**FIG. 1A** is a block diagram that illustrates an exemplary video coding system 10 that may utilize techniques in accordance with aspects described in this disclosure. As used described herein, the term "video coder" or "coder" refers generically to both video encoders and video decoders. In this disclosure, the terms "video coding" or "coding" may refer generically to video encoding and video decoding. In addition to video encoders and video decoders, the aspects described in the present application may be extended to other related devices such as transcoders (e.g., devices that can decode a bitstream and re-encode another bitstream) and middleboxes (e.g., devices that can modify, transform, and/or otherwise manipulate a bitstream).

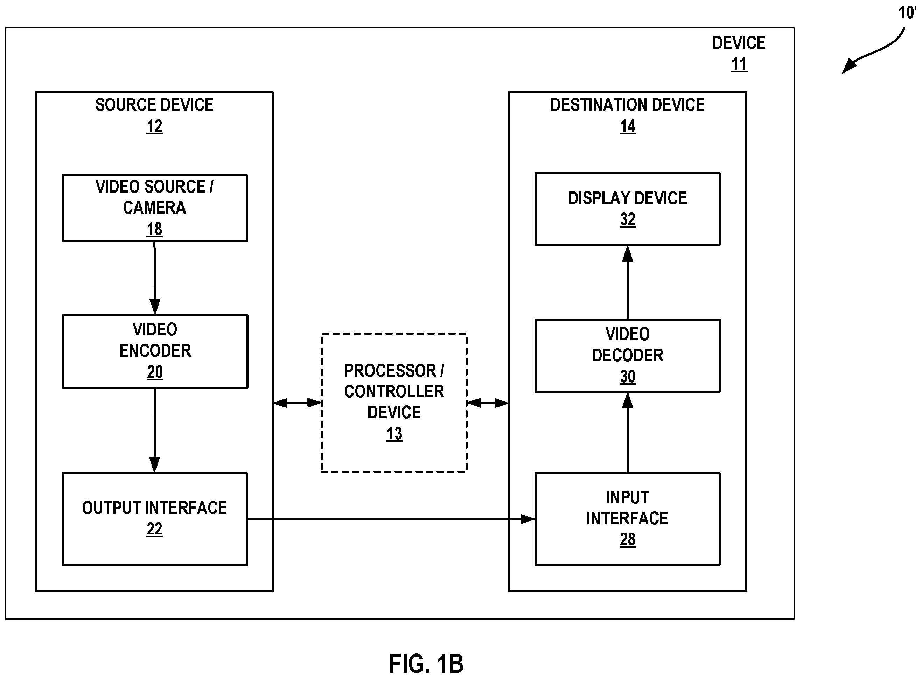

As shown in **FIG. 1A**, video coding system 10 includes a source device 12 that generates encoded video data to be decoded at a later time by a destination device 14. In the example of **FIG. 1A**, the source device 12 and destination device 14 constitute separate devices. It is noted, however, that the source device 12 and destination device 14 may be on or part of the same device, as shown in the example of **FIG. 1B**.

With reference once again, to **FIG. 1A**, the source device 12 and the destination device 14 may respectively comprise any of a wide range of devices, including desktop computers, notebook (e.g., laptop) computers, tablet computers, set-top boxes, telephone handsets such as so-called "smart" phones, so-called "smart" pads, televisions, cameras, display devices, digital media players, video gaming consoles, in-car computers, video streaming devices, devices that are wearable (or removeably attachable) by (to) an entity (e.g., a human, an animal, and/or another controlled device) such as eyewear and/or a wearable computer, devices or apparatus that can be consumed, ingested, or placed within an entity, and/or the like. In various embodiments, the source device 12 and the destination device 14 may be equipped for wireless communication.

The destination device 14 may receive, via link 16, the encoded video data to be decoded. The link 16 may comprise any type of medium or device capable of moving the encoded video data from the source device 12 to the destination device 14. In the example of **FIG. 1A**, the link 16 may comprise a communication medium to enable the source device 12 to transmit encoded video data to the destination device 14 in real-time. The encoded video data may be modulated according to a communication standard, such as a wireless communication protocol, and transmitted to the destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from the source device 12 to the destination device 14.

In the example of **FIG. 1A**, the source device 12 includes a video source 18, video encoder 20 and the output interface 22. In some cases, the output interface 22 may include a modulator/demodulator (modem) and/or a transmitter. In the source device 12, the video source 18 may include a source such as a video capture device, e.g., a video camera, a video archive containing previously captured video, a video feed interface to receive video from a video content provider, and/or a computer graphics system for generating computer graphics data as the source video, or a combination of such sources. As one example, if the video source 18 is a video camera, the source device 12 and the destination device 14 may form so-called "camera phones" or "video phones", as illustrated in the example of **FIG. 1B**. However, the techniques described in this disclosure may be applicable to video coding in general, and may be applied to wireless and/or wired applications.

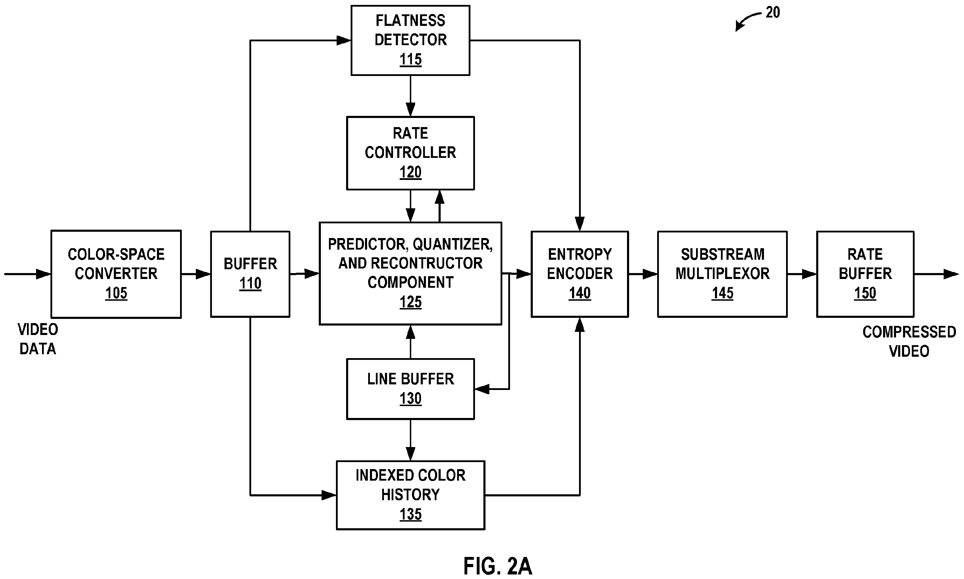

The captured, pre-captured, or computer-generated video may be encoded by the video encoder 20. The encoded video data may be transmitted to the destination device 14 via the output interface 22 of the source device 12. The encoded video data may also (or alternatively) be stored onto the storage device 31 for later access by the destination device 14 or other devices, for decoding and/or playback. The video encoder 20 illustrated in **FIG. 1A** and **1B** may comprise the video encoder 20 illustrated **FIG. 2A** or any other video encoder described herein.

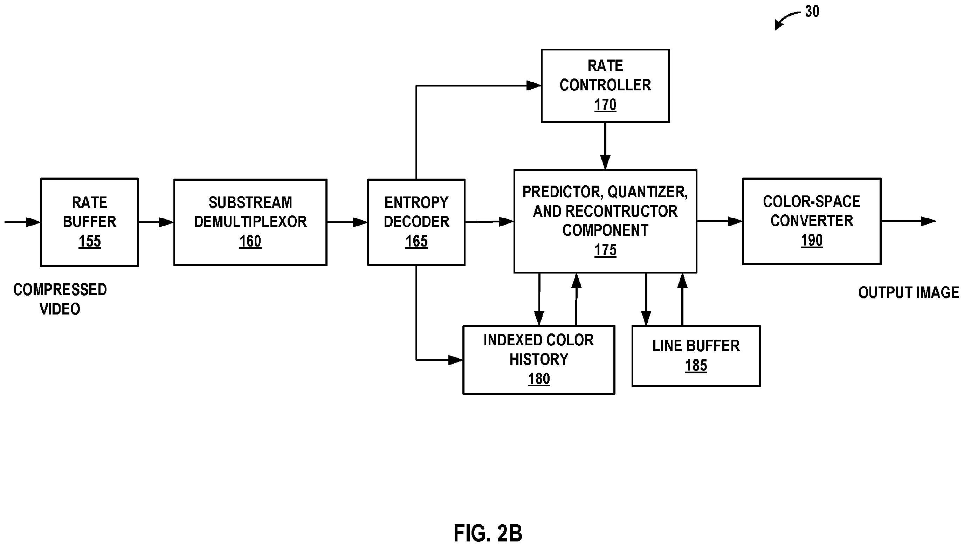

In the example of **FIG. 1A**, the destination device 14 includes the input interface 28, a video decoder 30, and a display device 32. In some cases, the input interface 28 may include a receiver and/or a modem. The input interface 28 of the destination device 14 may receive the encoded video data over the link 16 and/or from the storage device 31. The encoded video data communicated over the link 16, or provided on the storage device 31, may include a variety of syntax elements generated by the video encoder 20 for use by a video decoder, such as the video decoder 30, in decoding the video data. Such syntax elements may be included with the encoded video data transmitted on a communication medium, stored on a storage medium, or stored a file server. The video decoder 30 illustrated in **FIG. 1A** and **1B** may comprise the video decoder 30 illustrated in **FIG. 2B** or any other video decoder described herein.

The display device 32 may be integrated with, or external to, the destination device 14. In some examples, the destination device 14 may include an integrated display device and also be configured to interface with an external display device. In other examples, the destination device 14 may be a display device. In general, the display device 32 displays the decoded video data to a user, and may comprise any of a variety of display devices such as a liquid crystal display (LCD), a plasma display, an organic light emitting diode (OLED) display, or another type of display device.

In related aspects, **FIG. 1B** shows an example video coding system 10' wherein the source device 12 and the destination device 14 are on or part of a device 11. The device 11 may be a telephone handset, such as a "smart" phone or the like. The device 11 may include a processor/controller device 13 (optionally present) in operative communication with the source device 12 and the destination device 14. The video coding system 10' of FIG. 1B, and components thereof, are otherwise similar to the video coding system 10 of FIG. 1A, and components thereof.

The video encoder 20 and the video decoder 30 may operate according to a video compression standard, such as DSC. Alternatively, the video encoder 20 and the video decoder 30 may operate according to other proprietary or industry standards, such as the ITU-T H.264 standard, alternatively referred to as MPEG-4, Part 10, AVC, HEVC or extensions of such standards. The techniques of this disclosure, however, are not limited to any particular coding standard. Other examples of video compression standards include MPEG-2 and ITU-T H.263.

Although not shown in the examples of **FIGs. 1A** and **1B**, the video encoder 20 and the video decoder 30 may each be integrated with an audio encoder and decoder, and may include appropriate MUX-DEMUX units, or other hardware and software, to handle encoding of both audio and video in a common data stream or separate data streams.

If applicable, in some examples, MUX-DEMUX units may conform to the ITU H.223 multiplexer protocol, or other protocols such as the user datagram protocol (UDP).

The video encoder 20 and the video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of the video encoder 20 and the video decoder 30 may be included in one or more encoders or decoders, either of which may be integrated as part of a combined encoder/decoder in a respective device.

### Video Coding Process

As mentioned briefly above, the video encoder 20 encodes video data. The video data may comprise one or more pictures. Each of the pictures is a still image forming part of a video. In some instances, a picture may be referred to as a video "frame." When the video encoder 20 encodes the video data, the video encoder 20 may generate a bitstream. The bitstream may include a sequence of bits that form a coded representation of the video data. The bitstream may include coded pictures and associated data. A coded picture is a coded representation of a picture.

To generate the bitstream, the video encoder 20 may perform encoding operations on each picture in the video data. When the video encoder 20 performs encoding operations on the pictures, the video encoder 20 may generate a series of coded pictures and associated data. The associated data may include a set of coding parameters such as a QP. To generate a coded picture, the video encoder 20 may partition a picture into equally-sized video blocks. A video block may be a two-dimensional array of samples. The coding parameters may define a coding option (e.g., a coding mode) for every block of the video data. The coding option may be selected in order to achieve a desired rate-distortion performance.

In some examples, the video encoder 20 may partition a picture into a plurality of slices. Each of the slices may include a spatially distinct region in an image (e.g., a frame) that can be decoded independently without information from the rest of the regions in the image or frame. Each image or video frame may be encoded in a single slice or each image or video frame may be encoded in several slices. In DSC, the target bits allocated to encode each slice may be substantially constant. As part of performing an encoding operation on a picture, the video encoder 20 may perform encoding operations on each slice of the picture. When the video encoder 20 performs an encoding operation on a slice, the video encoder 20 may generate encoded data associated with the slice. The encoded data associated with the slice may be referred to as a "coded slice."

### DSC Video Encoder

**FIG. 2A** is a block diagram illustrating an example of the video encoder 20 that may implement techniques in accordance with aspects described in this disclosure. The video encoder 20 may be configured to perform some or all of the techniques of this disclosure. In some examples, the techniques described in this disclosure may be shared among the various components of the video encoder 20. In some examples, additionally or alternatively, a processor (not shown) may be configured to perform some or all of the techniques described in this disclosure.

For purposes of explanation, this disclosure describes the video encoder 20 in the context of DSC coding. However, the techniques of this disclosure may be applicable to other coding standards or methods.

In the example of **FIG. 2A**, the video encoder 20 includes a plurality of functional components. The functional components of the video encoder 20 include a color-space converter 105, a buffer, 110, a flatness detector 115, a rate controller 120, a predictor, quantizer, and reconstructor component 125, a line buffer 130, an indexed color history 135, an entropy encoder 140, a substream multiplexor 145, and a rate buffer 150. In other examples, the video encoder 20 may include more, fewer, or different functional components.

The color-space 105 converter may convert an input color-space to the color-space used in the coding implementation. For example, in one exemplary embodiment, the color-space of the input video data is in the red, green, and blue (RGB) color-space and the coding is implemented in the luminance Y, chrominance green Cg, and chrominance orange Co (YCgCo) color-space. The color-space conversion may be performed by method(s) including shifts and additions to the video data. It is noted that input video data in other color-spaces may be processed and conversions to other color-spaces may also be performed.

In related aspects, the video encoder 20 may include the buffer 110, the line buffer 130, and/or the rate buffer 150. For example, the buffer 110 may hold the color-space converted video data prior to the buffer 110's use by other portions of the video encoder 20. In another example, the video data may be stored in the RGB color-space and color-space conversion may be performed as needed, since the color-space converted data may require more bits.

The rate buffer 150 may function as part of the rate control mechanism in the video encoder 20, which will be described in greater detail below in connection with rate controller 120. The bits spent on encoding each block can vary highly substantially based on the nature of the block. The rate buffer 150 can smooth the rate variations in the compressed video. In some embodiments, a CBR buffer model or operational mode is employed in which bits are taken out from the buffer at a constant bit rate. In other embodiments, a VBR buffer model or operational mode may be employed in which bits are taken out from the buffer at a variable (non-constant bit rate). In some embodiments, if the video encoder 20 adds too many bits to the bitstream (e.g., at a rate higher than the rate bits are taken out from the buffer), the rate buffer 150 may overflow. On the other hand, the video encoder 20 may also need to add enough bits in order to prevent underflow of the rate buffer 150.

On the video decoder side, the bits may be added to rate buffer 155 of the video decoder 30 (see **FIG. 2B** which is described in further detail below) at a constant bit rate, and the video decoder 30 may remove variable numbers of bits for each block. To ensure proper decoding, the rate buffer 155 of the video decoder 30 should not "underflow" or "overflow" during the decoding of the compressed bit stream.

In some embodiments, the buffer fullness (BF) can be defined based on the values BufferCurrentSize representing the number of bits currently in the buffer and BufferMaxSize representing the size of the rate buffer 150, i.e., the maximum number of bits that can be stored in the rate buffer 150 at any point in time. The BF may be calculated as:

$$BF = ((BufferCurrentSize * 100) / BufferMaxSize)$$

It is noted that the above approach to calculating BF is merely exemplary, and that the BF may be calculated in any number of different ways, depending on the particular implementation or context.

The flatness detector 115 can detect changes from complex (i.e., non-flat) areas in the video data to flat (i.e., simple or uniform) areas in the video data, and/or vice versa. The terms "complex" and "flat" will be used herein to generally refer to the difficulty for the video encoder 20 to encode the respective regions of the video data. Thus, the term complex as used herein generally describes a region of the video data as being complex for the video encoder 20 to encode and may, for example, include textured video data, high spatial frequency, and/or other features which are complex to encode. The term flat as used herein generally describes a region of the video data as being simple for the video encoder 20 to encoder and may, for example, include a smooth gradient in the video data, low spatial frequency, and/or other features which are simple to encode. The transitions from complex to flat regions may be used by the video encoder 20 to reduce quantization artifacts in the encoded video data. Specifically, the rate controller 120 and the predictor, quantizer, and reconstructor component 125 can reduce such quantization artifacts when the transitions from complex to flat regions are identified. Similarly, transitions from flat to complex regions may be used by the video encoder 20 to increase the QP in order to reduce the expected rate required to code a current block.

The rate controller 120 determines a set of coding parameters, e.g., a QP. The QP may be adjusted by the rate controller 120 based on the buffer fullness of the rate buffer 150 and image activity of the video data (e.g., a transition from complex to flat regions or vice versa) in order to maximize picture quality for a target bitrate which ensures that the rate buffer 150 does not overflow or underflow. The rate controller 120 also selects a particular coding option (e.g., a particular mode) for each block of the video data in order to achieve the optimal rate-distortion performance. The rate controller 120 minimizes the distortion of the reconstructed images such that it satisfies the bit-rate constraint, i.e., the overall actual coding rate fits within the target bit rate. Thus, one purpose of the rate controller 120 is to determine a set of coding parameters, such as QP(s), coding mode(s), etc., to satisfy instantaneous and average constraints on rate while maximizing rate-distortion performance.

The predictor, quantizer, and reconstructor component 125 may perform at least three encoding operations of the video encoder 20. The predictor, quantizer, and reconstructor component 125 may perform prediction in a number of different modes. One example predication mode is a modified version of median-adaptive prediction. Median-adaptive prediction may be implemented by the lossless JPEG standard (JPEG-LS). The modified version of median-adaptive prediction which may be performed by the predictor, quantizer, and reconstructor component 125 may allow for parallel prediction of three consecutive sample values. Another example prediction mode is block prediction. In block prediction, samples are predicted from previously reconstructed pixels in the line above or to the left in the same line. In some embodiments, the video encoder 20 and the video decoder 30 may both perform an identical search on reconstructed pixels to determine the block prediction usages, and thus, no bits need to be sent in the block prediction mode. In other embodiments, the video encoder 20 may perform the search and signal block prediction vectors in the bitstream, such that the video decoder 30 need not perform a separate search. A midpoint prediction mode may also be implemented in which samples are predicted using the midpoint of the component range. The midpoint prediction mode may enable bounding of the number of bits required for the compressed video in even the worst-case sample.

The predictor, quantizer, and reconstructor component 125 also performs quantization. For example, quantization may be performed via a power-of-2 quantizer which may be implemented using a shifter. It is noted that other quantization techniques may be implemented in lieu of the power-of-2 quantizer. The quantization performed by the predictor, quantizer, and reconstructor component 125 may be based on the QP determined by the rate controller 120. Finally, the predictor, quantizer, and reconstructor component 125 also performs reconstruction which includes adding the inverse quantized residual to the predicted value and ensuring that the result does not fall outside of the valid range of sample values.

It is noted that the above-described example approaches to prediction, quantization, and reconstruction performed by the predictor, quantizer, and reconstructor component 125 are merely illustrative and that other approaches may be implemented. It is also noted that the predictor, quantizer, and reconstructor component 125 may include subcomponent(s) for performing the prediction, the quantization, and/or the reconstruction. It is further noted that the prediction, the quantization, and/or the reconstruction may be performed by several separate encoder components in lieu of the predictor, quantizer, and reconstructor component 125.

The line buffer 130 holds the output from the predictor, quantizer, and reconstructor component 125 so that the predictor, quantizer, and reconstructor component 125 and the indexed color history 135 can use the buffered video data. The indexed color history 135 stores recently used pixel values. These recently used pixel values can be referenced directly by the video encoder 20 via a dedicated syntax.

The entropy encoder 140 encodes the prediction residuals and any other data (e.g., indices identified by the predictor, quantizer, and reconstructor component 125) received from the predictor, quantizer, and reconstructor component 125 based on the indexed color history 135 and the flatness transitions identified by the flatness detector 115. In some examples, the entropy encoder 140 may encode three samples per clock per substream encoder. The substream multiplexor 145 may multiplex the bitstream based on a headerless packet multiplexing scheme. This allows the video decoder 30 to run three entropy decoders in parallel, facilitating the decoding of three pixels per clock. The substream multiplexor 145 may optimize the packet order so that the packets can be efficiently decoded by the video decoder 30. It is noted that different approaches to entropy coding may be implemented, which may facilitate the decoding of power-of-2 pixels per clock (e.g., 2 pixels/clock or 4pixels/clock).

## DSC Video Decoder

**FIG. 2B** is a block diagram illustrating an example of the video decoder 30 that may implement techniques in accordance with aspects described in this disclosure. The video decoder 30 may be configured to perform some or all of the techniques of this disclosure. In some examples, the techniques described in this disclosure may be shared among the various components of the video decoder 30. In some examples, additionally or alternatively, a processor (not shown) may be configured to perform some or all of the techniques described in this disclosure.

For purposes of explanation, this disclosure describes the video decoder 30 in the context of DSC coding. However, the techniques of this disclosure may be applicable to other coding standards or methods.

In the example of **FIG. 2B**, the video decoder 30 includes a plurality of functional components. The functional components of the video decoder 30 include a rate buffer 155, a substream demultiplexor 160, an entropy decoder 165, a rate controller 170, a predictor, quantizer, and reconstructor component 175, an indexed color history 180, a line buffer 185, and a color-space converter 190. The illustrated components of the video decoder 30 are analogous to the corresponding components described above in connection with the video encoder 20 in **FIG. 2A**. As such, each of the components of the video decoder 30 may operate in a similar fashion to the corresponding components of the video encoder 20 as described above.

## Quantization Parameter (QP)

As discussed above, the predictor, quantizer, and reconstructor component 125 of the encoder 20 may perform quantization that may introduce distortion in a block of video data. The amount of distortion can be controlled by a quantization parameter (QP) of the block. For example, the encoder 20 may use the QP for a block to determine a quantization step size for quantizing the color component values of the video data of the block. In some embodiments, instead of the encoder 20 storing the quantization step size for each QP, the encoder 20 may specify a scaling matrix as a function of QP. The quantization step size for each QP can be derived from the scaling matrix, wherein the derived value is not necessarily a power of two, e.g., the derived value can also be a non-power of two.

In some embodiments of a DSC test model, the respective minimum and maximum QP for luminance channel is set to 16 and 56, for 8bpc. For each luminance QP, there may be an associated chrominance QP which can be derived on the fly or inferred from a look up table.

## Skip Mode

If all the values of a single component in a given block of video data are zero, then the encoder 20 may effectively code the block using a skip mode. In some embodiments of skip mode coding, the encoder 20 may signal a 1-bit flag that may be read by the decoder 30, indicating if the current block is coded using skip mode (if all values are zero) or not in skip mode (if at least one value in a block is non-zero).

**Delta Size Unit-Variable Length Coding**

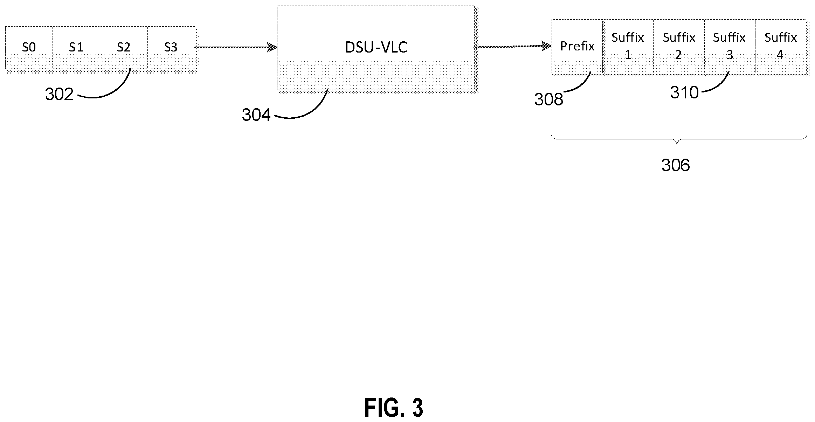

FIG. 3 shows an example of coding video data using Delta size unit-variable length coding (DSU-VLC). In some embodiments, the encoder 20 may use a DSU-VLC processor 304 to code quantized residual values of a K-length sample vector 302 (also referred to as a "group") into a coded sequence of bits 306. The coded sequence of bits 306 may comprise a prefix 308 and a suffix 310, wherein the suffix 310 comprises a plurality of suffix parts. The DSU-VLC processor 304 may correspond to the entropy encoder 140 illustrated in FIG. 2A. As used herein, samples may refer to the value in a single color component, e.g., for RGB 444, each pixel has three samples.

The prefix 308 indicates the size (e.g., length of bits) of the residual value (the size is denoted as B bits) of each of the suffix parts of the suffix 310. In some embodiments, the prefix 308 may be of variable length and coded using unary code. The suffix 310 indicates the actual residual values of all samples in the sample vector 302 (e.g., each suffix part of the suffix 310 may correspond to a sample of the sample vector 302). The encoder 20 may code all K residual values in the sample vector 302 to form the suffix 310 using a particular format (e.g., two's complement) and using the same number of bits (e.g., B bits) for each residual value.

As an example, if the sample vector 302 comprises 4 samples with the values [1, -2, -1, 0], the encoder 20 may need B = 2 bits to code each sample of the sample vector 302 using two's complement representation. As such, the prefix 308 may have a value of 001, which represents the unary code of the value B=2. The suffix 310 may comprise suffix parts having values of [01, 10, 11, 00], which respectively represent each of coded sample values of the sample vector 302 using B=2 bits. By decoding the prefix 308, usually done in a single clock cycle, the decoder 30 may be able to decode all the 4 samples of the suffix 310 in parallel.

**Entropy Coding in DSC**

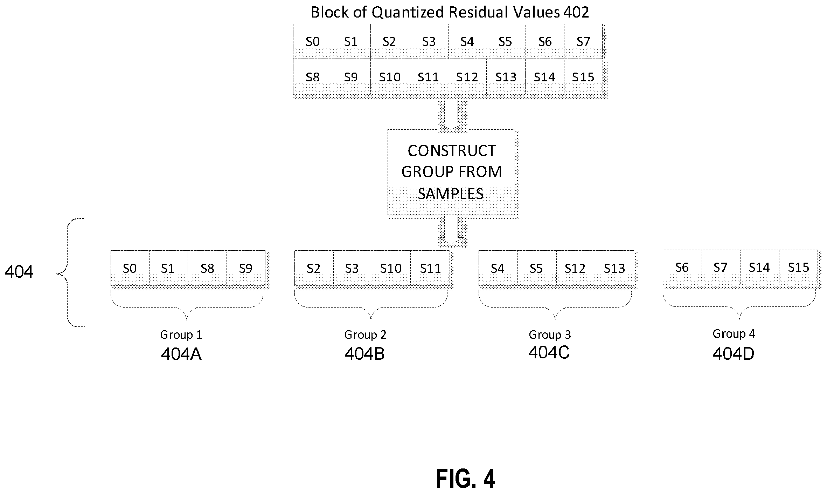

FIG. 4 illustrates an example of partitioning the samples of a given $P \times Q$ block of video data into a plurality of sample vectors (groups), in accordance with some embodiments. As illustrated in FIG. 4, the block 402 may be a $2 \times 8$ block comprising 16 samples. Each sample of the block 402 may correspond to a quantized residual value of a particular color component of the video data corresponding to the block 402. Before the samples are coded using the DSU-VLC processor 304, the encoder 20 may partition the samples into a plurality of sample vectors. For example, FIG. 4 illustrates the 16 samples of the block 402 partitioned into four sample vectors 404 each comprising 4 samples (e.g., sample vectors 404A, 404B, 404C, and 404D). The DSU-VLC processor 304 may code sample vectors 404A-404D to produce codes (not shown) each having a prefix and a suffix (e.g., as illustrated in FIG. 3). As described above, the decoder 30 (as illustrated in FIG. 2B) may be able to decode the prefixes and suffixes of each of the codes in parallel, allowing for the decoder 30 to decode 4 samples per clock cycle.

By using the encoder 20 to partition the samples of the block 402 into groups, a throughput of multiple samples per clock can be achieved by the decoder 30 when decoding the coded groups. While FIG. 4 illustrates the samples of the block 402 being partitioned uniformly into sample vectors 404, it is understood that the encoder 20 may partition a block of samples into N sample vectors uniformly or non-uniformly. In a uniform grouping method, all N sample vectors 404 will have an equal number of samples. On the other hand, the number of samples in each sample vector 404 may be different when using a non-uniform grouping method.

In some embodiments, whether the partitioning of the block 402 is uniform or non-uniform may be based upon a coding mode associated with the block 402. For example, the encoder 20 may use uniform grouping methods in block prediction and DPCM modes, while using non-uniform grouping methods in transform mode.

**QP Calculation**

In some embodiments, the rate controller 120 may derive or calculate the QP for a current block of video data (denoted as *currQP*). A technique to calculate QP is disclosed in U.S. App. No. 14/685,430, filed April 13, 2015, now published as Pub. No. US 2015/0296206, which is incorporated herein in its entirety by reference. As described in therein, the rate controller 120 may derive a QP for the current block (*currQP*) based upon a QP of a previous block of video data (e.g., the previous block of the video data in coding order), using the following equation:

$$currQP = prevQP + QpAdj * (diffBits > 0\,?\,1:-1),$$

where *prevQP* is the QP associated with the previous block, and *diffBits* represents the difference between the *previousBlockBits* and *targetBits*, and *QpAdj* is the QP offset value that is calculated based on the magnitude of *diffBits*. *previousBlockBits* corresponds to a number of bits that were used to code the previous block, while *targetBits* corresponds to a target number of bits for encoding the current block.

As can be seen in the above equation, when *previousBlockBits > targetBits*, *diffBits* is positive, and the rate controller 120 derives the current block QP by adding the offset *QpAdj* to the *prevQP.* In other words, QP value is not allowed to decrease when compared to the *prevQP.* When *previousBlockBits < targetBits*, *diffBits* is negative, and *currQP* is not allowed to increase when compared to *prevQP.*

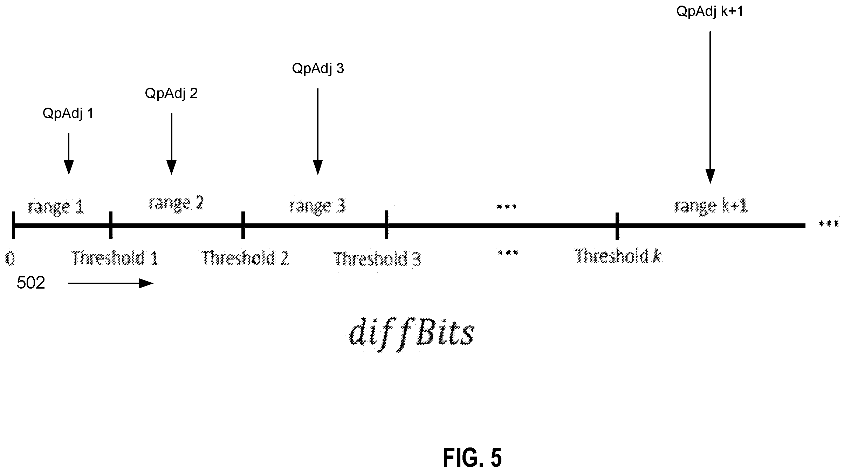

**FIG. 5** shows a graph illustrating an exemplary method of determining *QpAdj* based upon the value of *diffBits.* More particularly, the chart of FIG. 5 shows a horizontal axis representing the value of *diffBits* from 0 and increasing in the direction 502. The values of *diffBits* are segmented into segmented into *k+1* ranges using *k* threshold values (e.g., threshold 1, threshold 2, threshold 3,... threshold *k*), where *k* is an integer value. For example, "range 1" as illustrated in FIG. 5 may correspond to *diffBits* values between 0 and "threshold 1," while "range 2" corresponds to *diffBits* values between "threshold 1" and "threshold 2," "range 3" corresponds to *diffBits* values between "threshold 2" and "threshold 3," and so forth, until "range k+1" which corresponds to *diffBits* values above "threshold *k.*"

Each of the *diffBits* ranges (e.g., range 1, range 2,... range *k+1*) may be associated with a particular *QpAdj* value (e.g., $QpAdj_1$, $QpAdj_2$,... $QpAdj_{k+1}$). The values of $QpAdj_1$ through $QpAdj_{k+1}$ may increase as the range increases (e.g., $QpAdj_1 \leq QpAdj_2 \leq QpAdj_3 ... \leq QpAdj_{k+1}$). As such, in some embodiments, the rate controller 120 may calculate the offset value *QpAdj* as a function of *diffBits* in such a way that *QpAdj* monotonically increases as the magnitude of *diffBits* increases.

On the other hand, when *diffBits* <=0 (not shown), the absolute value of *diffBits* can be classified into *j+1* ranges using *j* threshold values, wherein *j* corresponds to an integer value. In addition, a particular *QpAdj* value may be associated with each range. In some embodiments, the *QpAdj* values associated with each of the *j+1* ranges may increase as the absolute value of *diffBits* increases. In used herein, this method to calculate QpAdj is referred to as the "default method".

Furthermore, in some embodiments, the rate controller 120 may adjust *currQP* based on the state of the rate buffer 150 (also referred to hereafter as the buffer 150), in order to prevent underflow and overflow of the buffer 150. The state of the buffer 150 may be represented in terms of buffer fullness *BF,* which measures a number of bits currently stored in the buffer 150 against a total number of bits that may be stored in the buffer 150. For example, in some embodiments, when *BF* exceeds a certain threshold (e.g., $P_1$), the rate controller 120 may adjust the value of *currQP* by incrementing *currQP* by a fixed offset (e.g., $p_1$), such that currQP += $p_1$. On the other hand, when *BF* falls below a certain threshold (e.g., $Q_1$), the rate controller 120 may adjust *currQP* by decrementing by a fixed offset (e.g., $q_1$), such that currQP -= $q_1$. In some embodiments, instead of a single threshold $P_1$ (or $Q_1$), the rate controller 120 may adjust *currQP* based upon multiple buffer fullness thresholds, wherein each buffer fullness threshold may be associated with a different corresponding offset value for which to adjust *currQP.*

In some embodiments, the rate controller 120 may further determine the *currQP* value based on whether or not the current block of video data is associated with a flat region or a transition from a complex to flat region. For example, the flatness detector 115 may determine that a transition from complex to flat region as occurs within the block of video data, or determines that the block of video data comprises a flat region. In response to the determination by the flatness detector 115, the rate controller 120 may set the *currQP* to a predetermined value.

## QP Update Modes in DSC

In DSC, various modes may be used by the rate controller 120 to update the QP of a current block of video data, based on the buffer fullness of the buffer 150. For example, in some embodiments when the buffer fullness of the buffer 150 falls below a certain threshold or exceeds a threshold, instead of using a default method to calculate the *QpAdj*, various methods may be used by the rate controller 120 to calculate *QpAdj* for determining *currQP.*

### Buffer exceeds threshold limit

As discussed above, in some embodiments, the rate controller 120 may calculate the value of *QpAdj* differently depending upon an amount of buffer fullness of the buffer 150. For example, in some embodiments, the rate controller 120 may maintain a plurality of threshold values [**$P_1$, $P_2$,... $P_n$**], which may correspond to n threshold values arranged in monotonically decreasing order. In addition, the rate controller 120 may maintain a plurality of respective methods [method-$P_1$, method-$P_2$, ... method-$P_n$] which may be used to calculate the *QpAdj.* The rate controller 120 may select a particular method for which to calculate *QpAdj* based upon the relationship between the buffer fullness of the buffer 150 and the plurality of threshold values. For example, in some embodiments:

$$If(\text{buffer fullness} >= \mathbf{P_1})$$

*method*-$P_1$ *is used to calculate QpAdj*;

$$else\ if(\text{buffer fullness} >= \mathbf{P_2})$$

*method*-$P_2$ *is used to calculate QpAdj*;

…

$$else\ if(\text{buffer fullness} >= \mathbf{P_n})$$

*method*-$P_n$ *is used to calculate QpAdj*;

In some embodiments, when diffBits > 0, for a given value of *diffBits,* the value of *QpAdj* calculated using method-$P_1$ >= *QpAdj* value calculated using method-$P_2$ >= ... *QpAdj* value calculated using method-$P_n$ >= *QpAdj* value calculated using the default method.

On the other hand, when *diffBits* < 0, *QpAdj* value calculated using method-$P_1$ <= *QpAdj* value calculated using method-$P_2$ <= ... *QpAdj* value calculated using method-$P_n$ <= *QpAdj* value calculated using default method. In other words, in accordance with some embodiments, the more full the buffer 150 is, the higher the value of *currQP* may be, as calculated by the rate controller 120.

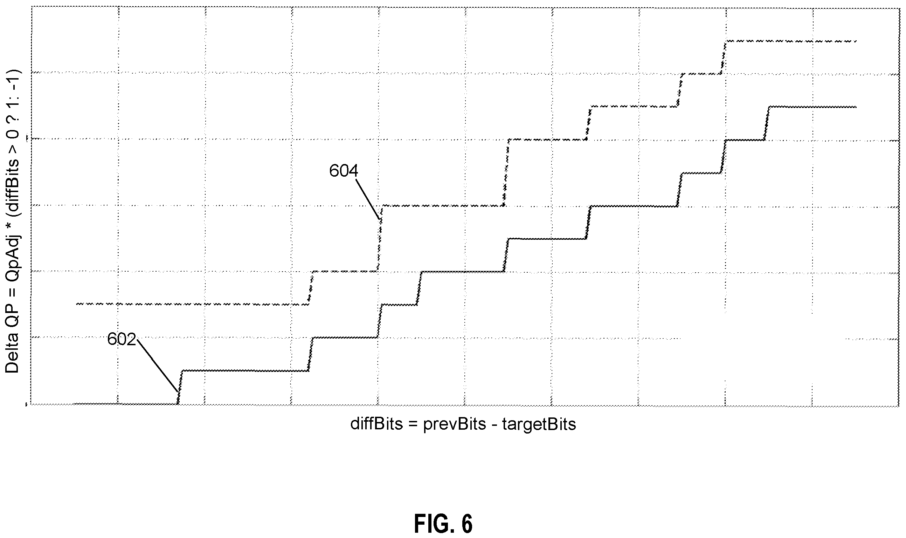

**FIG. 6** shows a graph illustrating the relationship of delta Qp as a function of *diffBits* for the default method and method-$P_1$ (e.g., corresponding to a threshold amount of buffer fullness). As used herein, delta QP generally refers to how much *currQP* differs from *PrevQP*. For example, delta QP may be defined as $QpAdj * (diffBits > 0 ? 1: -1)$. In other words, *QpAdj* may be considered the absolute value of delta QP. In some embodiments, delta QP will be positive when *diffBits* has a positive value, and negative when *diffBits* has a negative value.

The graph of FIG. 6 shows an x-axis corresponding to the value of *diffBits,* and a y-axis corresponding to the value of delta QP. The graph shows a first, lower curve 602 corresponding to delta QP as determined by the rate controller 120 using the default function, in response to when the buffer fullness of the buffer 150 is less than the $P_1$ threshold. In addition, the graph shows a second, upper curve 604 corresponding to delta QP as determined by the rate controller 120 using method-$P_1$, which is used when the buffer fullness of the buffer 150 meets or exceeds the $P_1$ threshold but is lower than the $P_2$ threshold. The first lower curve 602 and second upper curve 604 may be substantially in the form of step functions.

As illustrated in the graph of FIG. 6, for a given value of *diffBits* greater than 0, the value of *QpAdj* as calculated by the rate controller 120 using method-$P_1$ will be greater than or equal the value of *QpAdj* as calculated using the default method. On the other hand, for *diffBits* <= 0, the value of *QpAdj* (which is the absolute value of delta QP) as calculated using method-$P_1$ will be less than the value of *QpAdj* as calculated using the default method. In other words, for a given value of *diffBits,* delta QP (and consequently currQP) will generally be higher when the buffer fullness of the buffer 150 exceeds the threshold amount of $P_1$ in comparison to when the buffer fullness does not exceed $P_1$.

*Buffer falls below threshold limit*

In some embodiments, the rate controller 120 may use different methods to calculate the value of *QpAdj* (and consequently, *currQP*), based upon the buffer fullness of the buffer 150 being below one or more threshold values. For example, in some embodiments, the rate controller 120 may maintain m threshold values [$\mathbf{Q_1}$, $\mathbf{Q_2}$,... $\mathbf{Q_m}$] arranged in monotonically increasing order, and respective methods [method-$Q_1$, method-$Q_2$, ... method-$Q_m$] used by the rate controller 120 to calculate the *QpAdj*. For example, in some embodiments, the rate controller 120 may select a particular method for calculating *QpAdj* based on:

$$If(\text{buffer fullness} <= \mathbf{Q_1})$$

*method*-$Q_1$ *is used to calculate QpAdj*;

$$else\ if(\text{buffer fullness} <= \mathbf{Q_2})$$

*method-$Q_2$ is used to calculate QpAdj;*

...

else if(buffer fullness $<=$ **$Q_m$**)

*method-$Q_m$ is used to calculate QpAdj;*

In some embodiments, for a given value of *diffBits > 0*, *QpAdj* value calculated using the default method >= *QpAdj* value calculated using *method-$Q_1$* >= ... *QpAdj* value calculated using *method-$Q_2$* >= *QpAdj* value calculated using *method-$Q_m$*. On the other hand, for a given value of *diffBits <= 0*, *QpAdj* value calculated using the default method <= *QpAdj* value calculated using *method-$Q_1$* <= ... *QpAdj* value calculated using *method-$Q_2$* <= *QpAdj* value calculated using *method-$Q_m$*. In other words, in accordance with some embodiments, the lower the buffer fullness of the buffer 150, the lower the value of *currQP* may be as calculated by the rate controller 120.

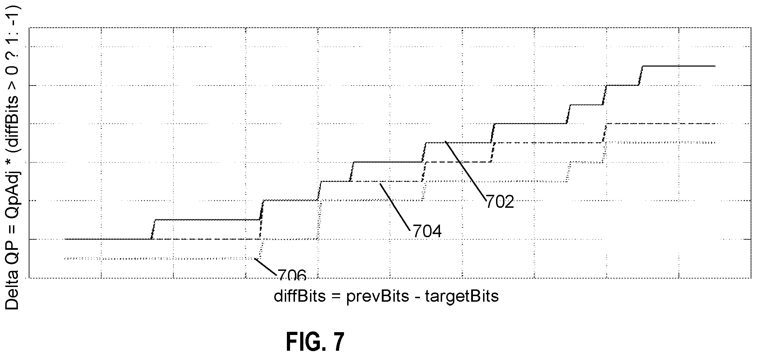

**FIG. 7** shows a graph illustrating the relationship of delta Qp as a function of diffBits for the default method, method-Q1 and method-Q2, in accordance with some embodiments. As in FIG. 6, the graph illustrated in FIG. 7 shows an x- axis corresponding to the value of *diffBits,* and a y-axis corresponding to the value of delta QP. The graph shows a first upper curve 702 (illustrated as a solid line) corresponding to delta QP as determined using the default function, which is used when the buffer fullness of the buffer 150 is greater than the Q1 threshold. The graph further shows second middle curve 704 (illustrated as a dashed line) and a third lower curve 706 (illustrated as a dotted line), which correspond respectively to delta QP as determined using method-Q1 and method-Q2. As discussed above, the rate controller 120 may use method-Q1 to calculate *QpAdj* (and hence delta QP) when the buffer fullness of the buffer 150 is between the Q1 and Q2 thresholds. The rate controller may use method-Q2 to calculate delta QP when the buffer fullness is between the Q2 and Q3 thresholds. Similar to FIG. 6, each if the curves 702, 704, and 706 may be substantially in the shape of step functions.

As illustrated in the graph of FIG. 7, for a given value of *diffBits* greater than 0, the value of *QpAdj* as calculated by the rate controller 120 using method-$Q_1$ will be less than or equal the value of *QpAdj* as calculated using the default method, and greater than or equal to the value of *QpAdj* calculated using method-$Q_2$. On the other hand, for *diffBits <= 0*, the value of *QpAdj* (which is the absolute value of delta QP) as calculated using method-$Q_1$ will be less than or equal to the value of *QpAdj* as calculated using the default method, and greater than or equal to the value of *QpAdj* calculated using method-$Q_2$. In other words, for a given value of *diffBits,* delta QP (and consequently currQP) will generally be lower when the buffer fullness of the buffer 150 is lower than the threshold amount of Q1 in comparison to when the buffer fullness is higher than the threshold amount of Q1.

### Buffer Fullness Calculation

In some embodiments, in order to be able to adjust the QP value of a current block of video data (*currQP*) based on a state of the buffer 150, it may be necessary for the rate controller 120 to be able to determine an accurate buffer fullness (BF) value for the buffer 150. In some embodiments, the maximum number of bits available in the buffer 150 may be adjusted as the encoder 20 encodes blocks of video data. For example, the size of the buffer 150 may linearly decrease at a constant rate after coding some fixed number of blocks in a slice, in such a way that at the end of the slice, the size of the buffer 150 (e.g., the maximum number of bits that can be contained in the buffer 150 at the end of the slice) may be denoted by *maxBufferBitsAtSliceEnd*. As such, at the end of a given slice of video data, *BF* of the buffer 150 is 100% if *BufferCurrentSize = maxBufferBitsAtSliceEnd*.

The size of the buffer 150 at a particular time may be denoted by *bufAdjSize*, and the rate at which the size of the buffer 150 decreases as blocks of video data in a slice are coded may be denoted by *bufferRateReductionPerBlock*. As such, the rate controller 120 may calculate the *BF* of the buffer 150 as,

$$BF = (((BufferCurrentSize * 100) + (bufAdjSize >> 1))/bufAdjSize)$$

$$(1)$$

where, *bufferAdjSize = BufferMaxSize - offset, offset = ((bufferRateReductionPerBlock) * (numBlocksCoded - numBlocksTh))*. As used herein, *numBlocksCoded* may represent the number of blocks coded by the encoder 20 in the slice so far, and *numBlocksTh* may correspond to a threshold parameter that is configurable by the encoder 20.

In some embodiments, the buffer 150 may linearly adjust its size per block of video data coded. In some embodiments, the rate at which the buffer 150 adjusted its size per block may be calculated as *bufferRateReduction-PerBlock= diffSize/*(*TotalnumberofBlocksInSlice - numBlocksTh*), where *diffSize = BufferMaxSize-maxBufferBitsAtSliceEnd*, or the total difference between the maximum size of the buffer 150 and the maximum size of the buffer 150 at the end of a slice. U.S. App. No. 14/820,404, filed August 6, 2015, which is incorporated herein in its entirety by reference, describes a method is described to calculate the buffer fullness (BF).

In some embodiments, the rate controller 210 may calculate the buffer fullness of the buffer 150 based on above Eq. (1) through hardware and/or software. However, Eq. (1) includes a division operation a denominator value in Eq. (1) changes depending on the position of the current block in the slice, causing the calculation to be potentially expensive. An alternative way to calculate buffer fullness is proposed in U.S. App. No. 62/305,314, filed March 8, 2016, which is incorporated herein in its entirety by reference. In some embodiments, the *offset* value is moved to the numerator from denominator in Eq. (1), so that the denominator is changed from *bufAdjSize* to *BufferMaxSize.* Because *Buffer-MaxSize* remains constant regardless of the position of the current block in the slice, the resulting equation may be much easier for the rate controller 120 to calculate. As such, Eq. (1) may be modified as

$$BF = (((BufferCurrentSize + offset) * 100) + (BufferMaxSize \gg 1))/BufferMaxSize) \quad (2)$$

The *offset* value in Eq. (2) may be calculated in the same way as described above. As the denominator in Eq. (2) is a constant value throughout the slice, the rate controller 120 may precompute the denominator in Eq. (2), which can be stored the codec's parameter set (e.g., as a look up table (LUT) or other data structure).

## Setting Maximum QP Value

In some embodiments, the rate controller 120 may enforce a maximum QP value when calculating the QP value for a current block of video data. The maximum QP value (also referred to as the threshold QP value) may act as an upper bound indicating an acceptable amount of quantization loss or distortion when coding video data. For example, in some embodiments, the rate controller 120 may calculate a *currQP* value for a current block of video data using any of the techniques described above. The rate controller 120 may then compare the calculated *currQP* with the maximum QP value. If the calculated *currQP* exceeds the maximum QP value, then the rate controller 120 may set *currQP* to be less than or equal to the maximum QP value.

In some embodiments, the maximum QP enforced by the rate controller 120 may be set to a predefined fixed value. However, setting the maximum QP to a single fixed value may not effectively work for all types of video content. In some embodiments, the rate controller 120 enforcing a fixed maximum QP value may artificially elevate QP values for blocks of video data when a high QP value is unnecessary. For example, in cases when the buffer 150 is close to empty, it may be desirable for the rate controller 120 to enforce a lower maximum QP value. This may be to reduce loss or distortion due to quantization and prevent the buffer 150 from emptying by increasing a number of bits used by the encoder 20 to code blocks of video data. On the other hand, if the buffer 150 is close to full, the enforced maximum QP value may need to be higher, in order to prevent potential overflow by reducing a number of bits used by the encoder 20 to code blocks of video data.

In some embodiments, the buffer 150 receives and stores coded video data encoded by the encoder 20, and outputs the coded video data to a video data bitstream. As such, at any given time, a number of bits of the buffer 150 may be occupied by coded video data (e.g., video data that has been coded by the encoder 20 but not yet output into the video data bitstream). As discussed above, the buffer fullness of the buffer 150 may indicate a ratio of the number of bits currently occupied in the buffer 150 and a current capacity of the buffer 150. The buffer fullness of the buffer 150 may change based upon the relationship between a number of bits used by the encoder 20 to code previous blocks of video data and a rate at which the coded video data stored in the buffer 150 is output to the bitstream.

In some embodiments, the encoder 20 may code video data using a fixed rate codec, such that the buffer 150 is configured to output bits of video data at a particular (e.g., constant) rate to form a video data bitstream. For example, during a time period in which the encoder is able to code a block of video data, the buffer 150 may be configured output a fixed number of bits to the bitstream. Therefore, if the encoder 20 on average is coding blocks of video data using more than the fixed number of bits, the buffer 150 may begin to fill up (e.g., increasing buffer fullness) and potentially overflow. On the other hand, if the encoder 20 on average is coding block of video data using less than the fixed number of bits, the buffer 150 may decrease in buffer fullness and may potentially empty out.

In some embodiments, the rate controller 120 may be configured to adjust the maximum QP value "on the fly" (e.g., during operation). By being able to adjust the maximum QP value dynamically during operation, the encoder 20 may be able to code video data using a lower average QP value (resulting in less loss through quantization) while ensuring that the rate buffer 150 does not overflow or empty out.

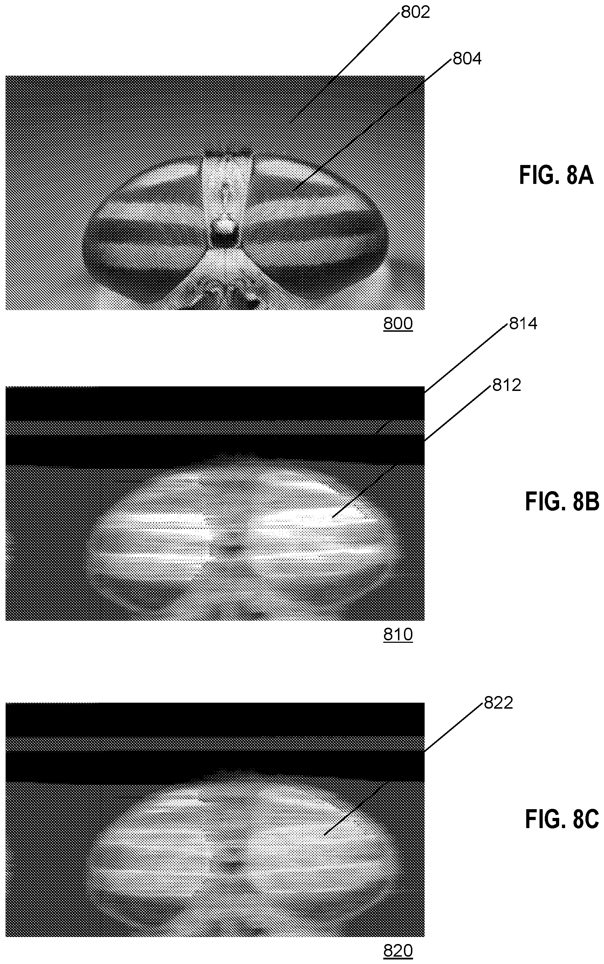

**FIG. 8A** illustrates an exemplary image 800 having a mixture of low complexity and high complexity image data. For example, as illustrated in FIG. 8A, the image 800 has a substantially flat background 802 (low complexity) and a complex foreground 804 (high complexity).

**FIG. 8B** illustrates a QP value map 810 showing QP values that may be used by the encoder 20 in coding different spatial areas of the image 800, using a fixed maximum QP value. The QP value map 810 may contain brighter areas 812 corresponding to spatial areas of the image 800 where the encoder 20 uses higher QP values in coding blocks of video data associated with those areas. In addition, dimmer areas 814 of the QP value map 810 correspond to spatial areas of the image 800 where the encoder 20 uses lower QP values in the coding the area of the image 800. For example, the brighter area 812 of the QP value map 810 may correspond to the complex foreground 804 of the image 800, and may be coded by the encoder 20 using a higher QP values, leading to a greater amount of quantization loss. On the other hand, the dimmer area 814 of the QP value map 810 may correspond to the substantially flat background 802 of the image 800, where the encoder 20 uses lower QP values to code the video data.

**FIG. 8C** illustrates another QP value map 820 showing QP values that may be used by the encoder 20 in coding different spatial areas of the image 800, where the encoder 20 is able to dynamically adjust the maximum QP value. As illustrated in FIG. 8C, by dynamically adjusting the maximum QP value, the average QP value across the image may be reduced, potentially improving image quality and reducing distortion. For example, the QP value used by the encoder 20 in coding the area 822 (corresponding to the area 812 of the QP value map 810) of the image may be lower when the encoder 20 is able to dynamically adjust the maximum QP value, in comparison to when a fixed maximum QP value is used (e.g., as illustrated in FIG. 8B).

In some embodiments, the maximum QP may refer to the value corresponding only to the luminance channel, or may refer to both the luminance channel and chrominance channel. Alternatively, the maximum QP may refer to a master maximum QP value from which the respective luminance and chrominance maximum QP values are calculated or inferred (e.g., from a look up table (LUT) or other data structure).

In some embodiments, the rate controller 120 may adjust the maximum QP based on a number of bits in the buffer 150 (e.g., measured as the buffer fullness of the buffer 150). In some embodiments, the rate controller 120 may calculate the maximum QP based upon complexity information (e.g., a complexity value) of previously coded blocks of video data. For example, if the previously coded blocks of video data have high complexity values, the rate controller 120 may adjust the maximum QP value to a higher value, such that subsequent blocks of video data may be coded using fewer bits. On the other hand, if the previously coded blocks of video data have low complexity values, the rate controller 120 may adjust the maximum QP value to a lower value, such that subsequent blocks of video data may be coded using a larger number of bits. In some embodiments, the rate controller 120 may determine an amount for which to adjust the maximum QP value for coding a current block of video data based upon a determination of whether a complexity value of one or more previously coded blocks of video data meets one or more threshold values. In some embodiments, the complexity information may be calculated by the flatness detector 115.

In some embodiments, a complexity value for a block of video data may be derived from the block using a transform, e.g., Hadamard, DCT, and/or the like. In some embodiments, the complexity value for the block may be derived based upon a number of bits spent on coding the block, and the block's associated QP value and mode information (e.g, the coding mode used to code the block).

In some embodiments, a complexity value of one or more previously coded blocks of video data may be inferred from a buffer fullness of the buffer 150. For example, in some embodiments, when the buffer fullness of the buffer 150 is high (e.g., the buffer 150 is nearly full), it may be inferred that the one or more previously coded blocks have a high complexity value. On the other hand, when the buffer fullness of the buffer 150 is low, it may be inferred that the one or more previously coded blocks high a low complexity value.

In some embodiments, the rate controller 120 may use both the state of the buffer 150 (e.g., buffer fullness) and the complexity value of previously coded blocks to adjust the maximum QP value.

In accordance with some embodiments, *maxFixedQp* may represent a default maximum QP value (e.g., a predetermined value) maintained by the encoder 20, while *maxCalQp* may represent an adjusted maximum QP value (e.g., by the rate controller 120). $\delta$ denotes an offset value (also referred to as an adjustment value) used to adjust the *maxFixedQp* to determine *maxCalQp*. That is, the adjusted maximum QP may be calculated as $maxCalQp = maxFixedQp - \delta$. In some embodiments, $\delta$ is determined based only on buffer fullness (*BF*) of the buffer 150. In another implementation, the rate controller 120 may combine both BF and complexity value of one or more previously coded blocks to derive the $\delta$ offset value.

In some embodiments, when *BF* is between a first smaller threshold ($S_n$) and a second larger threshold ($L_m$), such that $S_n < BF < L_m$, the rate controller 120 may use a default non-zero positive offset value $\delta = \delta_{default} > 0$ to calculate the *maxCalQp*. For example, instead of using a higher value of *maxFixedQp,* the rate controller 120 decreases *maxFixedQp* by a fixed offset to determine a lower value *maxCalQp,* which may be used to encode the successive blocks in the slice (e.g., the QP value used to encoded successive blocks in the slice may be limited by the lower *maxCalQp* instead of the higher *maxFixedQp.*

As discussed above, the buffer fullness of the buffer 150 may be affected by the number of bits used by the encoder 20 to code blocks of video data. For example, when the encoder 20 is coding blocks of video data using an average number of bits, the fullness of the buffer 150 may remain substantially constant. On the other hand, when the encoder 20 is coding blocks of video data using less than the average number of bits, the fullness of the buffer 150 may begin to decrease. When the encoder 20 is using more than the average number of bits to code blocks of video data, the fullness of the buffer 150 may increase.

In some embodiments, the buffer fullness of the buffer 150 may increase beyond the threshold $L_m$ when the calculated *maxCalQp* is low enough such that the encoder 20 effectively codes the visual information in the successive blocks of video data using greater than the average number of bits, e.g., due to the textured/complex visual information in the successive blocks. When buffer fullness exceeds the threshold value of $L_m$, the rate controller 120 may reduce the value of $\delta_{default}$ and use the reduced offset value to derive a new *maxCalQp* for the encoder 20 in coding the next successive blocks of video data. As such, *maxCalQp* will become higher, allowing the encoder 20 to encode blocks of video data with higher QP values. If this new maximum value results in further increased buffer fullness, then the reduced offset value is further reduced. The rate controller 120 may repeat the steps of successively reducing the offset value and calculating the *maxCalQp* until the buffer fullness is less than the predetermined threshold, in order to prevent the buffer 150 from overflowing. In certain cases, negative offset may be allowed to prevent buffer overflow.

On the other hand, when the *maxCalQp* results in the buffer fullness to decrease beyond the threshold $S_n$ (e.g., due to *maxCalQp* being high enough such that the encoder 20 codes the visual information in successive blocks of video data using less than the average number of bits), the rate controller 120 may increase the offset value, resulting in lower values of *maxCalQp*. The lower *maxCalQp* values may cause the encoder 20 to code blocks of video data using lower QP values, and thus on average a higher number of bits. In some embodiments, the offset value may be unaltered when the buffer fullness decreases below the threshold $S_n$.

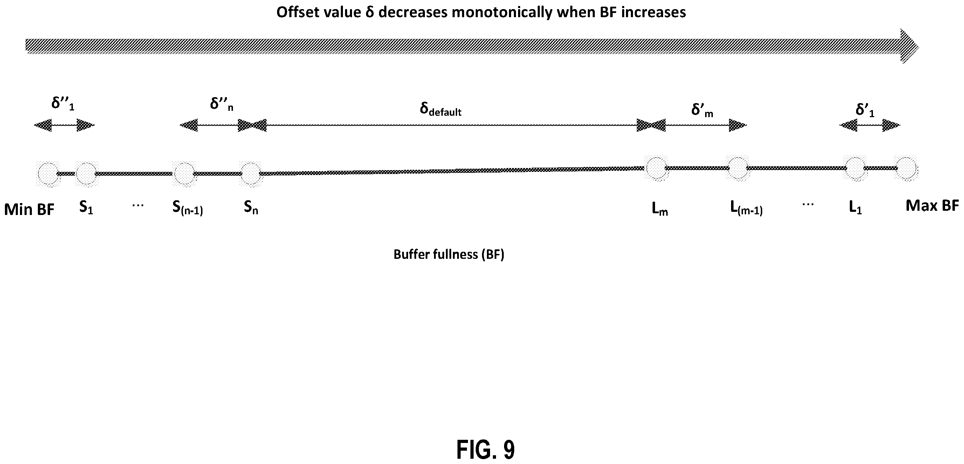

**FIG. 9** shows a graph of an exemplary scheme for choosing an offset delta value for different ranges of buffer fullness (BF). In some embodiments, the rate controller 120 may adjust the offset $\delta$ for determining *maxCalQp* based upon a plurality of different buffer fullness threshold values. FIG. 9 illustrates a horizontal axis corresponding to buffer fullness values of the buffer 150, ranging from a minimum value (Min BF) on the left side of the axis to a maximum value (Max BF) on the right side of the axis. A plurality of threshold values are located along the horizontal axis, including n smaller buffer values $[S_1, S_2,... S_n]$ and *m* larger buffer values $[L_1, L_2,... L_m]$. The threshold values are arranged such that $S_1 \leq, S_2 \leq, ... \leq S_n$ and $L_1 \geq, L_2 \geq, ... > L_m > S_n$.

Each pair of adjacent threshold values $[S_1, S_2,... S_n]$ and $[L_1, L_2,... L_m]$ may define a buffer fullness range associated with a particular offset value that may be used by the rate controller 120 for determining *maxCalQp*. For example, the range of buffer fullness values between $S_n$ and $L_m$ may be associated with the default offset value $\delta_{default}$. Each range defined by adjacent smaller thresholds $[S_1, S_2,... S_n]$ may be associated with a respective offset value $[\delta_1'', \delta_2'', ..., \delta_n'']$, wherein $\delta_1'' \geq \delta_2'' \geq \cdots \geq \delta_n'' \geq \delta_{default}$. For example, as illustrated in FIG. 9, the offset value $\delta_1''$ is associated with the range of BF values between Min BF and $S_1$, while the offset value $\delta_n''$ is associated with the range of BF values between $S_{n-1}$ and $S_n$.

In addition, each range defined by adjacent larger thresholds $[L_1, L_2,... L_m]$ may be associated with a respective offset value $[\delta_1', \delta_2', ..., \delta_m']$, wherein $\delta_1' \leq \delta_2' \leq \cdots \leq \delta_m' \leq \delta_{default}$. For example, as illustrated in FIG. 9, the offset value $\delta_1'$ is associated with the range of BF values between $L_1$ and Max BF, while the offset value $\delta_m'$ is associated with the range of BF values between $L_m$ and $L_{m-1}$.

In some embodiments, the rate controller 120 may calculate the offset value $\delta$ for adjusting maximum QP based on the buffer fullness *BF* of the buffer 150 based upon the following pseudocode:

$$\delta = \delta_{default};$$

$$\text{if}(BF >= \mathbf{L_1})$$
$$\delta = \delta_1';$$
$$\text{else if}(BF >= \mathbf{L_2})$$
$$\delta = \delta_2';$$
$$\ldots$$
$$\text{else if}(BF >= \mathbf{L_m})$$
$$\delta = \delta_m';$$

$$\text{if}(BF <= \mathbf{S_1})$$
$$\delta = \delta_1'';$$
$$\text{else if }(BF <= \mathbf{S_2})$$
$$\delta = \delta_2'';$$
$$\ldots$$
$$\text{else if }(BF <= \mathbf{S_n})$$
$$\delta = \delta_n'';$$

As discussed above, the rate controller 120 may use the offset value $\delta$ to adjust a maximum QP value as *maxCalQp = maxFixedQp - $\delta$*. In the above implementation, the designation of "less than and equal to" can be replaced by strictly "less than". Similarly, the designation of "greater than and equal to" can be replaced by strictly "greater than". In some embodiments, *n* and *m* may be the same or may not be the same.

As such, as described above an in FIG. 9, when the buffer fullness of the buffer 150 is low (e.g., is lower than $\mathbf{S_n}$), the rate controller 120 may set the value of the offset $\delta$ to a value higher than $\delta_{default}$, resulting in a lower *maxCalQp*. As such, the encoder 20 may code successive blocks of video data using a larger number of bits, potentially increasing the fullness of the buffer 150.

On the other hand, when the buffer fullness of the buffer 150 is high (e.g., exceeds $\mathbf{L_m}$), the rate controller 120 may set the value of the offset $\delta$ to a value lower than $\delta_{default}$, resulting in a higher *maxCalQp*. As such, the encoder 20 may code successive blocks of video data using a smaller number of bits, potentially decreasing the fullness of the buffer 150.

[In some embodiments, the buffer thresholds [$\mathbf{L_1}, \mathbf{L_2},\ldots \mathbf{L_m}$] and/or [$\mathbf{S_1}, \mathbf{S_2},\ldots \mathbf{S_n}$] may be the same for both luma and chroma components. In another implementation, they may be different for luma and chroma components. In another example, the offset value $\delta$ for each buffer threshold may be same or different for luma and chroma components.

The threshold values [$\mathbf{L_1}, \mathbf{L_2},\ldots \mathbf{L_m}$] may or may not be the same *m* threshold values used to determine QP modes [$\mathbf{Q_1}, \mathbf{Q_2},\ldots \mathbf{Q_m}$] as discussed above. Similarly, the threshold values [$\mathbf{S_1}, \mathbf{S_2},\ldots \mathbf{S_n}$] may or may not be the same n threshold values used to determine the QP modes [$\mathbf{P_1}, \mathbf{P_2},\ldots \mathbf{P_n}$].

In some embodiments, instead of determining an offset delta value for adjusting maximum QP based upon one or more buffer fullness threshold values, the rate controller 120 may determine an offset delta value from a current buffer fullness (BF) of the buffer 150 based upon a predetermined function or equation.

In some embodiments, the offset delta value used to adjust maximum QP may be determined periodically (e.g., at certain time interval, after a certain number of blocks have been coded, and/or the like). For example, the rate controller 120 may determine an offset delta value for adjusting maximum QP for each block of video data to be coded by the encoder 20, based on a current buffer fullness of the buffer 150.

The techniques disclosed here may be applied only at the encoder 20. For example, the encoder 20 may determine an offset value for adjusting the maximum QP, and signal the determined offset to the decoder 30 (e.g., as part of a coded video data bitstream transmitted to the decoder 30 through the link 16). In another alternative, the techniques proposed here can be applied to both encoder 20 and decoder 30. In some embodiments where the techniques proposed herein after applied to both the encoder 20 and the decoder 30, the encoder 20 does not need to signal the offset value to the decoder 30.

## Example Embodiment

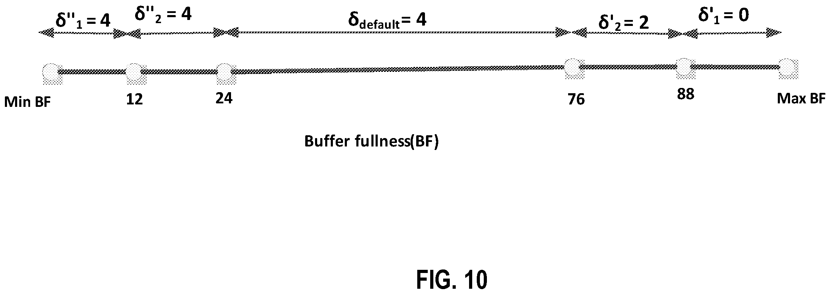

**FIG. 10** illustrates a graph of an exemplary scheme for choosing an offset delta value for different ranges of buffer fullness (BF). The graph illustrated in FIG. 10 is similar to that illustrated in FIG. 9, wherein buffer fullness values of the buffer 150 are shown on a horizontal axis ranging from a minimum BF (Min BF) on the left side of the axis to a maximum BF (Max BF) on the right side of the axis. In some embodiments, the BF values represented on the axis may correspond to percentage values. For example, Min BF may correspond to 0%, while Max BF may correspond to 100%. In addition, as in FIG. 9, the graph of FIG. 10 shows a plurality of threshold values located along the horizontal axis. In the scheme illustrated in FIG. 10, the rate controller 120 may maintain $n = 2$ smaller threshold values [$S_1$, $S_2$] having values of [12, 24] (shown on the left side of the horizontal axis), and $m = 2$ larger threshold values [$L_1$, $L_2$] having values of [88, 76] (shown on the right side of the horizontal axis).

Each pair of adjacent threshold values along the horizontal axis representing buffer fullness may correspond to a particular offset value usable by the rate controller 120 for adjusting the maximum QP. For example, when the buffer fullness of the buffer 150 is between 24% and 76%, the rate controller 120 may adjust the maximum QP by an offset of $\delta_{default} = 4$. When the buffer fullness is between 76% and 88%, the offset may be $\delta'_2 = 2$. When the buffer fullness is above 88%, the rate controller 120 may use an offset of $\delta'_1 = 0$.

On the other hand, in the embodiment illustrated in FIG. 9, the offset value may not decrease as buffer fullness decreases below the threshold value of 24. For example, the offsets $\delta''_1$ and $\delta''_2$, which may correspond to buffer fullness ranges of below 12 and between 12 and 24 respectively, may both correspond to a value of 4. The thresholds [$L_1$, $L_2$] and [$S_1$, $S_2$] may be the same for both luma and chroma channels.

## Adjustments to Max OP Based on Picture Parameters

In an embodiment, the rate controller 120 further adjusts the max QP based on one or more picture parameters (e.g., source bit depth, compressed bitrate, and/or the like) associated with the video data to be coded. For example, , a default value for the source bit depth of the video data may be, for example, 8 bits per component. In such a case, the max QP can be adjusted as follows:

$$maxQp = maxQp + \big((bitDepth - 8) \ll a\big)$$

where the parameter *a* may be tuned (e.g.,, the parameter *a* may be modified by the rate controller 120). For example, in Advanced DSC (A-DSC) a default value of *a* = 2 may be used.

In the embodiment, the equation above for max QP is modified based upon changes in the default value for source bit depth. The equation is as below, wherein the parameter *bd* indicates the default bit depth value (e.g., default number of bits per component).

$$maxQp = maxQp + \big((bitDepth - bd) \ll a\big)$$

The rate controller 120 adjusts the max QP based on a compressed bitrate value.

In some embodiments, a default compressed bitrate may be 6bpp (4:1 compression for 8bpc source content). In the A-DSC codec, the compressed bitrate can be defined using m fractional bits, meaning that a compressed bitrate of 6bpp will be stored internally in the codec as (6 « *m*). For example, when m = 4, the internally stored value may be 6<<4 = 96.

In some embodiments assuming the default compressed bitrate equates to 6bpp, for a compressed bitrate having a value below 6bpp, the rate controller 120 may adjusted the max QP as follows:

$$maxQp = maxQp + \left(\left((96 - bpp) \gg m\right) \ll b_0\right)$$

Conversely, for a bitrate above 6bpp, the rate controller 120 may adjusted the max QP as follows:

$$maxQp = maxQp - \left(\left((bpp - 96) \gg m\right) \ll b_1\right)$$

Where $b_0$, and $b_1$ may correspond to predetermined fixed values for scaling the offset amount to $maxQp$. In some embodiments, the values of $m$, $b_0$, and $b_1$ may be $m = 4$, $b_0 = 3$, $b_1 = 2$. It is understood that in other embodiments, the equations above for max QP may be modified based upon changes in the default compressed bitrate value.

In some embodiments where both the source bit depth and the compressed bitrate are different from their default values (e.g., 8bpc and 6bpp, respectively), the rate controller 120 adjusts the max QP twice as follows (in another embodiment not part of the invention, the following steps may not be necessarily in order):

- Modify the max QP based on the source bit depth.
- Further modify the max QP based on the compressed bitrate.

In the embodiment, after adjusting the max QP based on picture parameters, the rate controller 120 further adjusts the max QP dynamically on the fly by the coder using the techniques described in the previous section (e.g., based on the buffer fullness of the buffer 150).The rate controller 120 initially adjusts the max QP value based upon picture parameters such as source bit depth and compressed bit rate. The adjusted max QP value is used as the $maxFixedQp$ value for the purpose of adjusting max QP value on the fly based upon the buffer fullness of the buffer 150.

**Process Flow**

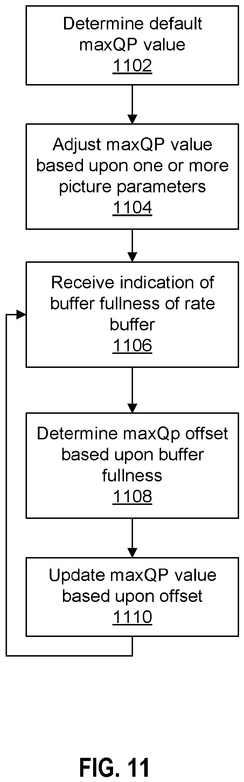

**FIG. 11** shows a flowchart of an exemplary process for adjusting a maximum QP value for coding blocks of video data. At block 1102, the rate controller 120 may determine a default maximum QP value. In some embodiments, the maximum QP value may be a predetermined value.

At block 1104, the rate controller 120 adjusts the maximum QP value based upon one or more picture parameters. In the embodiment, the picture parameters corresponds to a source bit depth or a compressed bitrate. In the embodiment, the rate controller 120 first adjusts the maximum QP value based upon source bit depth, and then based upon compressed bitrate. In another embodiment not part of the invention, the rate controller 120 adjusts the maximum QP value based only upon source bit depth, or only upon compressed bitrate. In another embodiment not part of the invention, the rate controller 120 only adjusts the maximum QP value based upon source bit depth or compressed bitrate if the source bit depth or compressed bitrate deviates from a default value. In the embodiment, the adjusted maximum QP value may be referred to as $maxFixedQp$.

At block 1106, the rate controller 120 receives an indication of an amount of buffer fullness of the buffer 150. At block 1108, the rate controller determines a maximum QP offset based upon the buffer fullness of the buffer. In the embodiment, the rate controller 120 compares the buffer fullness value against one or more threshold values to determine the offset value. For example, the one or more threshold values defines one or more buffer fullness ranges, wherein different offset values is associated with different buffer fullness ranges. At block 1110, the rate controller 120 determines a maximum QP value based upon the adjusted maximum QP (e.g., $maxFixedQp$, as determined at block 1104) and the determined offset value. For example, the rate controller 120 determines a maximum QP value $maxCalQp$ as a difference between $maxFixedQp$ and the determined offset value. The determined maximum QP value is then used by the encoder 20 in coding blocks of video data.

In some embodiments, blocks 1106 through 1110 may repeat as the encoder 20 codes successive blocks of video data. For example, in some embodiments, the rate controller 120 may receive indications of buffer fullness (block 1106) at periodic intervals (e.g., at certain time intervals, or after a certain number of blocks have been coded). The rate controller 120 may then determine a new offset and maximum QP value (blocks 1108, 1110) to be used by the encoder 20 for coding subsequent blocks of video data. This loop may repeat until the encoder 20 has coded all blocks of video data.

By dynamically adjusting the maximum QP value used to code blocks of video data based on buffer fullness, the rate controller 120 may potentially limit the maximum QP value used to code the blocks of video data, while preventing the buffer 150 from emptying out or overflowing. For example, by increasing the offset value (and thus decreasing the maximum QP value) when the buffer fullness is low (e.g., below certain threshold values), the encoder 20 may encode blocks of video data using a smaller QP value than it may have used otherwise, decreasing quantization losses and prevent the buffer from emptying.

Information and signals disclosed herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative logical blocks, and algorithm steps described in connection with the embodiments disclosed herein may be implemented as electronic hardware, computer software, or combinations of both. To clearly illustrate this interchangeability of hardware and software, various illustrative components, blocks, and steps have been described above generally in terms of their functionality. Whether such functionality is implemented as hardware or software depends upon the particular application and design constraints imposed on the overall system. Skilled artisans may implement the described functionality in varying ways for each particular application.

The techniques described herein may be implemented in hardware, software, firmware, or any combination thereof. Such techniques may be implemented in any of a variety of devices such as general purposes computers, wireless communication device handsets, or integrated circuit devices having multiple uses including applications in wireless communication device handsets, automotive, appliances, wearables, and/or other devices. Any features described as devices or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software or hardware configured for encoding and decoding, or incorporated in a combined video encoder-decoder (CODEC). Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, or units are described in this disclosure to emphasize functional aspects of devices configured to perform the disclosed techniques, but do not necessarily require realization by different hardware units. Rather, as described above, various units may be combined in a codec hardware unit or provided by a collection of inter-operative hardware units, including one or more processors as described above, in conjunction with suitable software and/or firmware.

Although the foregoing has been described in connection with various different embodiments, features or elements from one embodiment may be combined with other embodiments without departing from the teachings of this disclosure. However, the combinations of features between the respective embodiments are not necessarily limited thereto. Various embodiments of the disclosure have been described.

**Claims**

1. An apparatus for encoding video information, comprising:

    a buffer unit configured to store encoded video information;
    a hardware processor configured to:

determine a buffer fullness of the buffer unit, the buffer fullness being indicative of a ratio between a number of bits currently occupied in the buffer unit and a current capacity of the buffer unit;
determine an initial maximum quantization parameter, QP, value *maxQp;*
adjust the initial maximum QP value based on a bit depth of the video information, *bitDepth,* according to the equation *maxQp = maxQp + ((bitDepth - bd) << a)* to obtain a first adjusted maximum QP value, where parameter a may be modified by a rate controller and parameter *bd* is a default bit depth value;
adjust the first adjusted maximum QP value based on one or more picture parameters to obtain a second adjusted maximum QP value, the one or more picture parameters comprising a compressed bitrate of the video information to be coded;
determine an adjustment value based at least in part upon the determined buffer fullness of the buffer unit;
adjust the second adjusted maximum QP value using the determined adjustment value to obtain a third adjusted maximum QP value, wherein the third adjusted maximum QP value specifies a maximum QP value that may be used to encode the current block of the video information;
encode the current block of video information based on a QP value to form a video data bitstream for display or transmission, in accordance with a restriction that the QP value may not exceed the third adjusted maximum QP value.

2. The apparatus of claim 1, wherein the hardware processor is further configured to set the adjustment value to a default adjustment value when the buffer fullness of the buffer unit is at a level between a higher first fullness threshold and a lower second fullness threshold, wherein the default adjustment value is greater than zero.

3. The apparatus of claim 2, wherein the hardware processor is further configured to set the adjustment value to a value higher than the default adjustment value with the buffer fullness of the buffer unit is lower than the second fullness threshold.

4. The apparatus of claim 2, wherein the hardware processor is further configured to set the adjustment value to a value lower than the default adjustment value with the buffer fullness of the buffer unit is higher than the first fullness threshold.

5. The apparatus of claim 1, wherein the QP value is further based at least in part upon the buffer fullness of the buffer unit.

6. The apparatus of claim 1, wherein the buffer unit is further configured to output bits of encoded video data to the video data bitstream at a fixed rate.

7. A method for encoding video information, comprising:

determining a buffer fullness of the buffer unit configured to store encoded video information, the buffer fullness being indicative of a ratio between a number of bits currently occupied in the buffer unit and a current capacity of the buffer unit;
determining an initial maximum quantization parameter, QP, value *maxQp,*
adjust the initial maximum QP value based on a bit depth of the video information, *bitDepth,* according to the equation *maxQp = maxQp + ((bitDepth - bd) << a)* to obtain a first adjusted maximum QP value, where parameter a may be modified by a rate controller and parameter *bd* is a default bit depth value;
adjusting the first adjusted maximum QP value based on one or more picture parameters to obtain a second adjusted maximum QP value, the one or more picture parameters comprising a compressed bitrate of the video information to be coded;
determining an adjustment value based at least in part upon the determined buffer fullness of the buffer unit;
adjusting the second adjusted maximum QP value using the determined adjustment value to obtain a third adjusted maximum QP value, wherein the third adjusted maximum QP value specifies a maximum QP value that may be used to encode the current block of the video information;
encoding the current block of video information based on a QP value to form a video data bitstream for display or transmission, in accordance with a restriction that the QP value may not exceed the third adjusted maximum QP value.

8. The method of claim 7, further comprising setting the adjustment value to a default adjustment value when the buffer fullness of the buffer unit is at a level between a higher first fullness threshold and a lower second fullness threshold, wherein the default adjustment value is greater than zero.

**9.** The method of claim 8, further comprising setting the adjustment value to a value higher than the default adjustment value with the buffer fullness of the buffer unit is lower than the second fullness threshold.

**10.** The method of claim 8, further comprising setting the adjustment value to a value lower than the default adjustment value with the buffer fullness of the buffer unit is higher than the first fullness threshold.

**11.** The method of claim 7, wherein the QP value is further based at least in part upon the buffer fullness of the buffer unit.

**12.** The method of claim 7, wherein the buffer unit is further configured to output bits of encoded video data to the video data bitstream at a fixed rate.


**Patentansprüche**

**1.** Vorrichtung zum Encodieren von Videoinformationen, die Folgendes umfasst:

eine Puffereinheit, die zum Speichern von encodierten Videoinformationen konfiguriert ist;
einen Hardware-Prozessor, konfiguriert zum:

Bestimmen einer Pufferfülle der Puffereinheit, wobei die Pufferfülle ein Verhältnis zwischen einer Anzahl von derzeit in der Puffereinheit belegten Bits und einer derzeitigen Kapazität der Puffereinheit angibt;
Bestimmen eines anfänglichen maximalen QP-(Quantization Parameter)-Werts $maxQp$;
Justieren des anfänglichen maximalen QP-Werts auf der Basis einer Bittiefe der Videoinformationen, $bitDepth$, gemäß der Gleichung $maxQp = maxQp + ((bitDepth - bd) << a)$, um einen ersten justierten maximalen QP-Wert zu erhalten, wobei der Parameter a durch eine Ratensteuerung modifiziert werden kann und der Parameter $bd$ ein Standard-Bittiefenwert ist;
Justieren des ersten justierten maximalen QP-Wertes auf der Basis von einem oder mehreren Bildparametern, um einen zweiten justierten maximalen QP-Wert zu erhalten, wobei die ein oder mehreren Bildparameter eine komprimierte Bitrate der zu codierenden Videoinformationen umfassen;
Bestimmen eines Justierwerts zumindest teilweise auf der Basis der bestimmten Pufferfülle der Puffereinheit;
Justieren des zweiten justierten maximalen QP-Wertes anhand des bestimmten Justierwerts, um einen dritten justierten maximalen QP-Wert zu erhalten, wobei der dritte justierte maximale QP-Wert einen maximalen QP-Wert spezifiziert, der zum Encodieren des aktuellen Blocks der Videoinformationen verwendet werden kann;
Encodieren des aktuellen Blocks von Videoinformationen auf der Basis eines QP-Werts zum Bilden eines Videodaten-Bitstroms zur Anzeige oder Übertragung gemäß einer Einschränkung, dass der QP-Wert den dritten justierten maximalen QP-Wert nicht überschreiten darf.

**2.** Vorrichtung nach Anspruch 1, wobei der Hardware-Prozessor ferner zum Setzen des Justierwerts auf einen Standardjustierwert konfiguriert ist, wenn die Pufferfülle der Puffereinheit auf einem Niveau zwischen einem höheren ersten Fülleschwellenwert und einem niedrigeren zweiten Fülleschwellenwert liegt, wobei der Standardjustierwert größer als Null ist.

**3.** Vorrichtung nach Anspruch 2, wobei der Hardware-Prozessor ferner zum Setzen des Justierwerts auf einen Wert konfiguriert ist, der höher ist als der Standardjustierwert, wenn die Pufferfülle der Puffereinheit niedriger ist als der zweite Fülleschwellenwert.

**4.** Vorrichtung nach Anspruch 2, wobei der Hardware-Prozessor ferner zum Setzen des Justierwerts auf einen Wert konfiguriert ist, der niedriger ist als der Standardjustierwert, wenn die Pufferfülle der Puffereinheit höher ist als der erste Fülleschwellenwert.

**5.** Vorrichtung nach Anspruch 1, wobei der QP-Wert zumindest teilweise auf der Pufferfülle der Puffereinheit basiert.

**6.** Vorrichtung nach Anspruch 1, wobei die Puffereinheit ferner zum Ausgeben von Bits von encodierten Videodaten mit einer festen Rate an den Videodaten-Bitstrom konfiguriert ist.

**7.** Verfahren zum Encodieren von Videoinformationen, das Folgendes beinhaltet:

Bestimmen einer Pufferfülle der Puffereinheit, die zum Speichern von encodierten Videoinformationen konfiguriert ist, wobei die Pufferfülle ein Verhältnis zwischen einer Anzahl von derzeit in der Puffereinheit belegten Bits und einer derzeitigen Kapazität der Puffereinheit angibt;

Bestimmen eines anfänglichen maximalen QP-(Quantization Parameter)-Wertes *maxQp*,

Justieren des anfänglichen maximalen QP-Wertes auf der Basis einer Bittiefe der Videoinformationen, *bitDepth*, gemäß der Gleichung $maxQp = maxQp + ((bitDepth\ bd) << a)$, um einen ersten justierten maximalen QP-Wert zu erhalten, wobei der Parameter a durch eine Ratensteuerung modifiziert werden kann und der Parameter *bd* ein Standard-Bittiefenwert ist;

Justieren des ersten justierten maximalen QP-Werts auf der Basis von einem oder mehreren Bildparametern, um einen zweiten justierten maximalen QP-Wert zu erhalten, wobei die ein oder mehreren Bildparameter eine komprimierte Bitrate der zu codierenden Videoinformationen umfassen;

Bestimmen eines Justierwerts zumindest teilweise auf der Basis der bestimmten Pufferfülle der Puffereinheit;

Justieren des zweiten justierten maximalen QP-Werts anhand des bestimmten Justierwerts, um einen dritten justierten maximalen QP-Wert zu erhalten, wobei der dritte justierte maximale QP-Wert einen maximalen QP-Wert spezifiziert, der zum Encodieren des aktuellen Blocks der Videoinformationen verwendet werden kann;

Encodieren des aktuellen Blocks von Videoinformationen auf der Basis eines QP-Werts zum Bilden eines Videodaten-Bitstroms zur Anzeige oder Übertragung gemäß einer Einschränkung, dass der QP-Wert den dritten justierten maximalen QP-Wert nicht überschreiten darf.

8. Verfahren nach Anspruch 7, das ferner das Setzen des Justierwerts auf einen Standard-Justierwert beinhaltet, wenn die Pufferfülle der Puffereinheit auf einem Niveau zwischen einem höheren ersten Fülleschwellenwert und einem niedrigeren zweiten Fülleschwellenwert liegt, wobei der Standardjustierwert größer als Null ist.

9. Verfahren nach Anspruch 8, das ferner das Setzen des Justierwerts auf einen Wert beinhaltet, der höher ist als der Standardjustierwert, wenn die Pufferfülle der Puffereinheit niedriger ist als der zweite Fülleschwellenwert.

10. Verfahren nach Anspruch 8, das ferner das Setzen des Justierwerts auf einen Wert umfasst, der niedriger ist als der Standardjustierwert, wenn die Pufferfülle der Puffereinheit höher ist als der erste Fülleschwellenwert.

11. Verfahren nach Anspruch 7, wobei der QP-Wert zumindest teilweise auf der Pufferfülle der Puffereinheit basiert.

12. Verfahren nach Anspruch 7, wobei die Puffereinheit ferner zum Ausgeben von Bits von encodierten Videodaten an den Videodaten-Bitstrom mit einer festen Rate konfiguriert ist.

**Revendications**

1. Appareil de codage d'informations vidéo, comprenant :

une unité tampon configurée pour stocker des informations vidéo codées ;
un processeur matériel configuré pour :

déterminer un remplissage de tampon de l'unité tampon, le remplissage de tampon étant indicatif d'un rapport entre un nombre de bits actuellement occupés dans l'unité tampon et une capacité courante de l'unité tampon ;
déterminer une valeur initiale maximale de paramètre de quantification, QP, valeur *maxQp* ;
ajuster la valeur QP initiale maximale sur la base d'une profondeur de bits des informations vidéo, *bitDepth*, conformément à l'équation $maxQp - maxQp + ((bitDepth - bd) << a)$ afin d'obtenir une première valeur QP maximale ajustée, où le paramètre *a* peut être modifié par un contrôleur de débit et le paramètre *bd* est une valeur de profondeur de bits par défaut ;
ajuster la première valeur QP maximale ajustée sur la base d'un ou de plusieurs paramètres d'image pour obtenir une deuxième valeur QP maximale ajustée, l'un ou plusieurs paramètres d'image comprenant un train binaire comprimé des informations vidéo à coder ;
déterminer une valeur d'ajustement basée en partie au moins sur le remplissage de tampon déterminé de l'unité tampon ;
ajuster la deuxième valeur QP maximale ajustée en utilisant la valeur d'ajustement déterminée pour obtenir une troisième valeur QP maximale ajustée, dans lequel la troisième valeur QP maximale ajustée spécifie une valeur QP maximale qui peut être utilisée pour coder le bloc courant d'informations vidéo ;

coder le bloc courant d'informations vidéo sur la base d'une valeur QP afin de former un train binaire de données vidéo pour affichage ou transmission, conformément à une restriction selon laquelle la valeur QP ne peut pas dépasser la troisième valeur QP maximale ajustée.

2. Appareil selon la revendication 1, dans lequel le processeur matériel est configuré en outre pour régler la valeur d'ajustement à une valeur d'ajustement par défaut lorsque le remplissage de tampon de l'unité tampon est à un niveau entre un premier seuil de remplissage plus haut et un deuxième seuil de remplissage plus bas, dans lequel la valeur d'ajustement par défaut est supérieure à zéro.

3. Appareil selon la revendication 2, dans lequel le processeur matériel est configuré en outre pour régler la valeur d'ajustement à une valeur plus haute que la valeur d'ajustement par défaut avec le remplissage de tampon de l'unité tampon étant plus bas que le deuxième seuil de remplissage.

4. Appareil selon la revendication 2, dans lequel le processeur matériel est configuré en outre pour régler la valeur d'ajustement à une valeur plus basse que la valeur d'ajustement par défaut avec le remplissage de tampon de l'unité tampon étant plus haut que le premier seuil de remplissage.

5. Appareil selon la revendication 1, dans lequel la valeur QP est basée en outre en partie au moins sur le remplissage de tampon de l'unité tampon.

6. Appareil selon la revendication 1, dans lequel l'unité tampon est configurée en outre pour sortir des bits de données vidéo codées au train binaire de données vidéo à un débit fixe.

7. Procédé de codage d'informations vidéo, comprenant :

déterminer un remplissage de tampon de l'unité tampon configurée pour stocker des informations vidéo codées, le remplissage de tampon étant indicatif d'un rapport entre un nombre de bits actuellement occupés dans l'unité tampon et une capacité courante de l'unité tampon ;
déterminer une valeur initiale maximale de paramètre de quantification, QP, valeur *maxOp* ;
ajuster la valeur QP initiale maximale initiale sur la base d'une profondeur de bits des informations vidéo, *bitDepth,* conformément à l'équation *maxOp - maxOp + ((bitDepth - bd) << a)* afin d'obtenir une première valeur QP maximale ajustée, où le paramètre *a* peut être modifié par un contrôleur de débit et le paramètre *bd* est une valeur de profondeur de bits par défaut ;
ajuster la première valeur QP maximale ajustée sur la base d'un ou de plusieurs paramètres d'image pour obtenir une deuxième valeur QP maximale ajustée, l'un ou plusieurs paramètres d'image comprenant un train binaire comprimé des informations vidéo à coder ;
déterminer une valeur d'ajustement basée en partie au moins sur le remplissage de tampon déterminé de l'unité tampon ;
ajuster la deuxième valeur QP maximale ajustée en utilisant la valeur d'ajustement déterminée pour obtenir une troisième valeur QP maximale ajustée, dans lequel la troisième valeur QP maximale ajustée spécifie une valeur QP maximale qui peut être utilisée pour coder le bloc courant d'informations vidéo ;
coder le bloc courant d'informations vidéo sur la base d'une valeur QP afin de former un train binaire de données vidéo pour affichage ou transmission, conformément à une restriction selon laquelle la valeur QP ne peut pas dépasser la troisième valeur QP maximale ajustée.

8. Procédé selon la revendication 7, comprenant en outre régler la valeur d'ajustement à une valeur d'ajustement par défaut lorsque le remplissage de tampon de l'unité tampon est à un niveau entre un premier seuil de remplissage plus haut et un deuxième seuil de remplissage plus bas, dans lequel la valeur d'ajustement par défaut est supérieure à zéro.

9. Procédé selon la revendications 8, comprenant en outre régler la valeur d'ajustement à une valeur plus haute que la valeur d'ajustement par défaut avec le remplissage de tampon étant plus bas que le deuxième seuil de remplissage.

10. Procédé selon la revendication 8, comprenant en outre régler la valeur d'ajustement à une valeur plus basse que la valeur d'ajustement par défaut avec le remplissage de tampon étant plus haut que le premier seuil de remplissage.

11. Procédé selon la revendication 7, dans lequel la valeur QP est basée en outre en partie au moins sur le remplissage de tampon de l'unité tampon.

**12.** Procédé selon la revendication 7, dans lequel l'unité tampon est configurée en outre pour sortir des bits de données vidéo codées au train binaire de données vidéo à un débit fixe.

FIG. 1A

10

**SOURCE DEVICE 12**

VIDEO SOURCE 18

VIDEO ENCODER 20

OUTPUT INTERFACE 22

16

**DESTINATION DEVICE 14**

DISPLAY DEVICE 32

VIDEO DECODER 30

INPUT INTERFACE 28

FIG. 1B

FIG. 2A

FIG. 2B

EP 3 434 017 B1

| S0 | S1 | S2 | S3 |
|---|---|---|---|

302

DSU-VLC

304

| Prefix | Suffix 1 | Suffix 2 | Suffix 3 | Suffix 4 |
|---|---|---|---|---|

308

310

306

**FIG. 3**

Block of Quantized Residual Values 402

| S0 | S1 | S2 | S3 | S4 | S5 | S6 | S7 |
| S8 | S9 | S10 | S11 | S12 | S13 | S14 | S15 |

CONSTRUCT GROUP FROM SAMPLES

404

| S0 | S1 | S8 | S9 |

Group 1
404A

| S2 | S3 | S10 | S11 |

Group 2
404B

| S4 | S5 | S12 | S13 |

Group 3
404C

| S6 | S7 | S14 | S15 |

Group 4
404D

FIG. 4

FIG. 5

diffBits = prevBits - targetBits

Delta QP = QpAdj * (diffBits > 0 ? 1: -1)

FIG. 6

FIG. 7

EP 3 434 017 B1

FIG. 8A

800

FIG. 8B

810

FIG. 8C

820

Offset value δ decreases monotonically when BF increases

$\delta''_1$ $\delta''_n$ $\delta_{default}$ $\delta'_m$ $\delta'_1$

Min BF $\quad$ $S_1$ $\quad$ ··· $\quad$ $S_{(n-1)}$ $\quad$ $S_n$ $\qquad\qquad\qquad$ $L_m$ $\quad$ $L_{(m-1)}$ $\quad$ ··· $\quad$ $L_1$ $\quad$ Max BF

Buffer fullness (BF)

FIG. 9

EP 3 434 017 B1

FIG. 10

```
┌─────────────────────────┐
│    Determine default    │
│      maxQP value        │
│         1102            │
└─────────────────────────┘
             │
             ▼
┌─────────────────────────┐
│   Adjust maxQP value    │
│ based upon one or more  │
│    picture parameters   │
│         1104            │
└─────────────────────────┘
             │
             ▼
┌─────────────────────────┐
│   Receive indication of │
│  buffer fullness of rate│
│         buffer          │
│         1106            │
└─────────────────────────┘
             │
             ▼
┌─────────────────────────┐
│  Determine maxQp offset │
│   based upon buffer     │
│        fullness         │
│         1108            │
└─────────────────────────┘
             │
             ▼
┌─────────────────────────┐
│   Update maxQP value    │
│    based upon offset    │
│         1110            │
└─────────────────────────┘
```

# FIG. 11

**REFERENCES CITED IN THE DESCRIPTION**

**Patent documents cited in the description**

- US 68543015
- US 20150296206 A
- US 82040415
- US 62305314